# EUROPEAN PATENT APPLICATION

(11) **EP 2 378 428 A1**
(43) Date of publication of application: **19.10.2011**
(21) Application number: 10729156.9
(22) Date of filing: 05.01.2010
(51) Int. Cl.: G06F 13/00, H04L 12/56

(54) **COMMUNICATION TERMINAL AND COMMUNICATION STATUS MODIFICATION METHOD**

(30) Priority: 09.01.2009 JP 2009004111
(71) Applicant: Panasonic Corporation, Kadoma-shi Osaka 571-8501 (JP)
(72) Inventor: BADUGE, Thilmee, Osaka-shi, Osaka 540-6207 (JP); MURAMOTO, Eiichi, Osaka-shi, Osaka 540-6207 (JP)
(74) Representative: Kügele, Bernhard
(86) International application number: PCT/JP2010/000015
(87) International publication number: WO 2010/079736

(57) **Abstract**

A generating unit (210) generates group formation data for forming groups among nodes making up an ALM distribution tree. A transmitting unit (220) transmits the group formation data to a node that is a destination set to a communication terminal. When a condition for grouping is satisfied, the generating unit (210) converts the group formation data into data for changing at least one of the number of groups and the number of nodes corresponding to each of the groups. Every time the group formation data is converted, the transmitting unit (220) transmits the converted group formation data to the node that is the destination set to the communication terminal. The group formation data is data for forming a group in which a local improvement process of switching positions of two nodes with each other is performed.

## Description

### [Technical Field]

The present invention relates to communication terminals and communication state change methods, and particularly to a communication terminal and a communication state change method for performing a process in an ALM (Application Layer Multicast) distribution tree.

### [Background Art]

When video streaming or the like is performed over the Internet through communication terminals making up an ALM (Application Layer Multicast) distribution tree, to maintain quality of a video to be streamed, it is necessary to address packet loss or delay variation which is caused by dynamic change in network traffic. In this case, it is necessary to dynamically reconstruct the ALM distribution tree. The ALM distribution tree shows a connection structure between each of the communication terminals in an application-layer network (hereinafter, referred to as an overlay network).

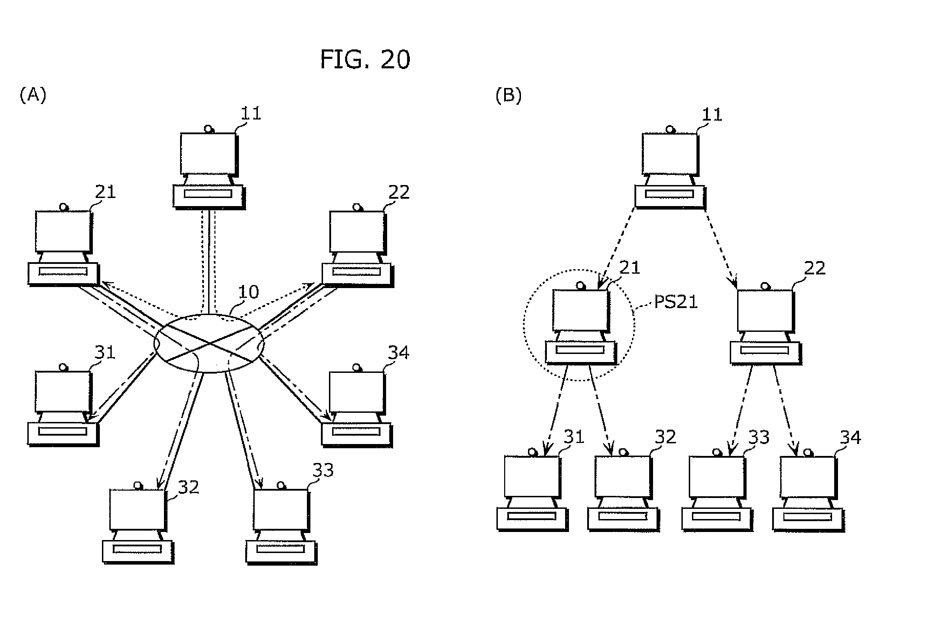

FIG. 20 is a diagram illustrating an ALM distribution tree. FIG. 20 (A) shows an example of physical topology based on a physical link.

As shown by FIG. 20 (A), communication terminals 11, 21, 22, and 31 to 34 are connected to the Internet 10 based on the physical link. In FIG. 20 (A), for example, the communication terminal 11 transmits, through unicast communication, data via the communication terminal 21 to the communication terminal 31. In addition, the communication terminal 11 transmits, through the unicast communication, data via the communication terminal 22 to the communication terminal 33.

FIG. 20 (B) shows an example of ALM topology based on a virtual link. FIG. 20(B) shows an ALM distribution tree in which data paths at a time of transmitting data between the communication terminals 11, 21, 22, and 31 to 34 as shown by FIG. 20 (A) are represented by the virtual link.

From the ALM distribution tree shown by FIG. 20 (B), it is easy to understand that, for instance, data transmitted by the communication terminal 11 is transmitted via the communication terminal 22 to the communication terminal 34. Hereinafter, each of the communication terminals making up the ALM distribution tree is referred to as a node.

As shown by FIG. 20 (B), the ALM distribution tree has a hierarchy. The ALM distribution tree shown by FIG. 20 (B) has, for example, three levels in the hierarchy. The node 11 is a node at the first level in the hierarchy. The nodes 21 and 22 are nodes at the second level in the hierarchy. The nodes 31 to 34 are nodes at the third level in the hierarchy. In other words, the node 11 is a node at the highest level in the hierarchy. The nodes 31 to 34 are nodes at the lowest level in the hierarchy.

Furthermore, as shown by FIG. 20 (B), data destinations are preset to each of the nodes making up the ALM distribution tree, according to a position of each node in the ALM distribution tree. For instance, as shown by FIG. 20 (B), data destinations of the node 21 in a position PS21 at the second level are set to the nodes 31 and 32 at the third level. A data destination is represented by, for example, an IP (Internet Protocol) address.

Moreover, the data destinations of each node making up the ALM distribution tree are nodes that are at one level lower than a level of each of self nodes. It is to be noted that no data destination is set to nodes at the lowest level in the ALM distribution tree.

A method for monitoring traffic with a centralized management server and for reconstructing in consideration of a traffic balance is often employed as a method for dynamically reconstructing an ALM distribution tree. However, an increase in the number of nodes making up the ALM distribution tree (e.g., the number of communication terminals participating in a video streaming session) causes the following problems.

One example of the problems is that processing lags behind due to an increase in processing load of the centralized management server or an increase in network traffic around the centralized management server. Moreover, another example of the problems is that unnecessary delay occurs, because it is necessary to deliver, to each node, structure information about a new distribution tree calculated by the centralized management server.

As a result, it is desirable to cause each node to autonomously perform a process of reconstruction of the ALM distribution tree (hereinafter, referred to as a local improvement process) using only information about peripheral node (hereinafter, referred to as local information).

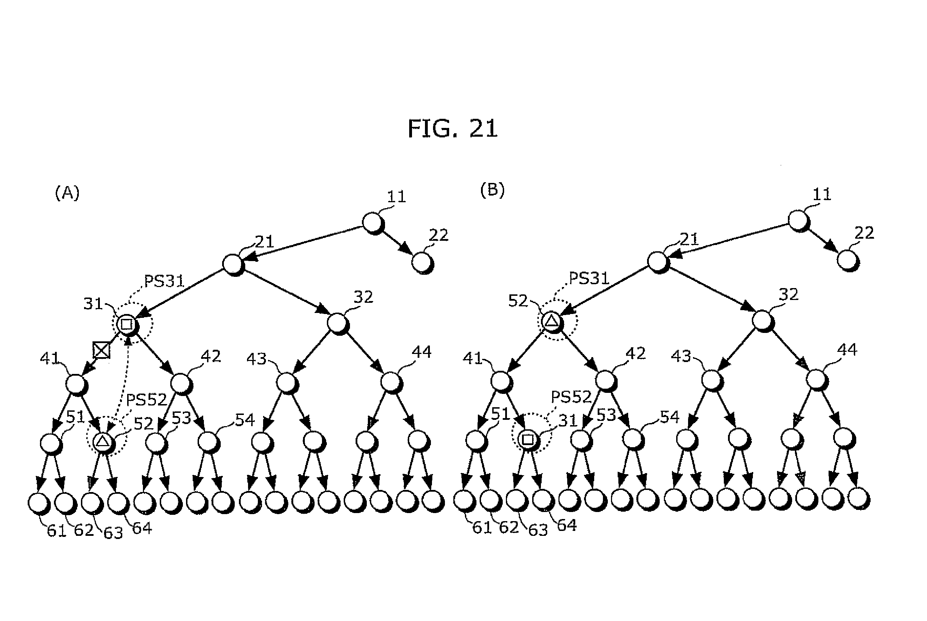

FIG. 21 is a diagram illustrating a local improvement process.

More specifically, FIG. 21 is a diagram illustrating a process performed, assuming a case where a congestion (hereinafter, referred to as a network congestion) has occurred in a network between the node 31 and a node 41.

Here, it is assumed that the network congestion means that, for example, traffic between two nodes is equal to or greater than a predetermined value (e.g., a bandwidth accounting for 90% of the largest bandwidth). For instance, when 9 Mbps bandwidth is used between the two nodes whose largest bandwidth is 10 Mbps, a network congestion is assumed to occur. To put it differently, when the traffic between the two nodes becomes equal to or greater than 9 Mbps, the network congestion is assumed to occur.

FIG. 21 (A) shows a situation where a process of switching a position of the node 31 with a position of a node 52 in an ALM distribution tree is performed as a local improvement process for relieving the network congestion.

The ALM distribution tree shown by FIG. 21 (A) further includes nodes in addition to the nodes 11, 21, 22, and 31 to 34 shown by FIG. 20 (B). Part of the nodes includes nodes 41 to 44, 51 to 54, and 61 to 64. It is to be noted that FIG. 21 (A) does not show the nodes 33 and 34.

Here, it is assumed that data destinations of the node 31 in a position PS31 at the third level are set to the nodes 41 and 42. Furthermore, it is assumed that data destinations of the node 52 in a position PS52 at the fifth level are set to the nodes 63 and 64.

FIG. 21 (B) shows a structure of the ALM distribution tree after the local improvement process is performed. To perform such a local improvement process, it is necessary to obtain information about peripheral node. For this reason, generally, each of the nodes collects in advance the information about peripheral node necessary for performing the local improvement process. The information about peripheral node is, for instance, information about data destination.

Thus, when a position of the node 31 in the position PS31 is switched with a position of the node 52 in the position PS52 through the local improvement process, as shown by FIG. 21 (B), the data destinations of the node 52 in the position PS31 are set to the nodes 41 and 42. Moreover, the data destinations of the node 31 in the position PS52 are set to the nodes 63 and 64. With this, even after the local improvement process is performed, data transmitted from a node at the highest level reaches a node at the lowest level.

On the other hand, when the local improvement process is dispersively performed, there is a possibility that the local improvement process is simultaneously performed at multiple locations. Simultaneously performing the local improvement process at the multiple locations in the ALM distribution tree causes a problem that consistency of the ALM distribution tree cannot be maintained.

FIG. 22 is a diagram illustrating that consistency of an ALM distribution tree cannot be maintained.

FIG. 22 (A) illustrates that a local improvement process is simultaneously performed at multiple locations. The ALM distribution tree shown by FIG. 22(A) differs from the ALM distribution tree shown by FIG. 21 (A) in that part of the nodes is not shown. Apart from the above, the ALM distribution tree shown by FIG. 22 (A) is the same as the ALM distribution tree shown by FIG. 21 (A), and thus a detailed description of the former is not repeated.

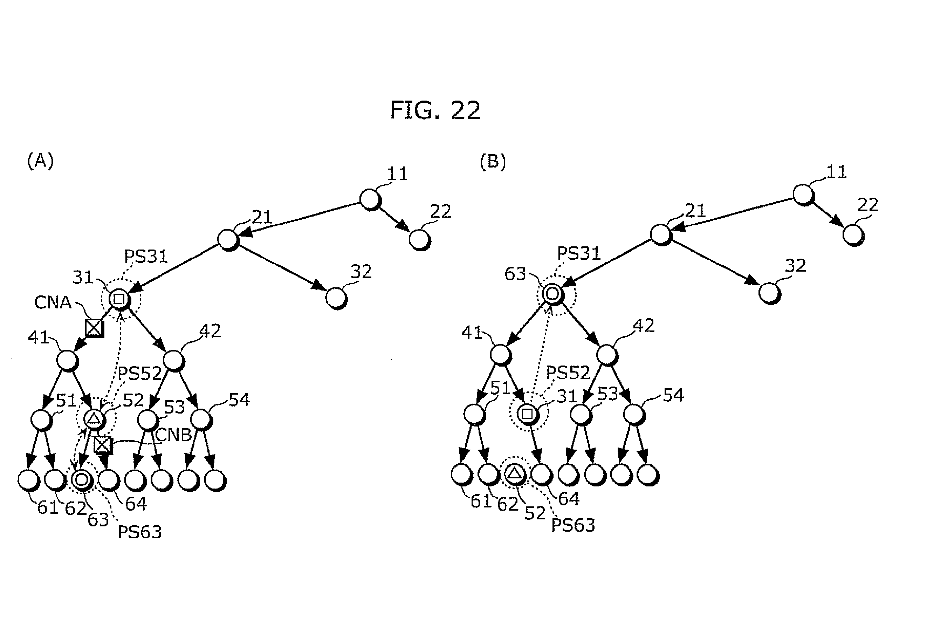

In FIG. 22 (A), it is assumed that a network congestion CNA and a network congestion CNB simultaneously occur. The network congestion CNA is a network congestion between the nodes 31 and 41. The network congestion CNB is a network congestion between the nodes 52 and 64.

Moreover, it is assumed that the following respective local improvement processes A and B are performed on a corresponding one of the network congestions CNA and CNB independently of each other and simultaneously.

The local improvement process A is assumed to be a process of switching a position of a node in the position PS31 with that of a node in the position PS52. The local improvement process B is assumed to be a process of switching a position of a node in the position PS52 with that of a node in the position PS63.

Here, it is assumed that data destinations of the node in the position PS31 shown by FIG. 22 (A) are the nodes 41 and 42. In addition, it is assumed that data destinations of the node in the position PS52 are the nodes 63 and 64.

The local improvement processes A and B are performed independently of each other and simultaneously. Consequently, for instance, through the local improvement process B, the position of the node 63 is assumed to be switched with the position PS52, and the position of the node 52 is assumed to be switched with the position PS63. In this case, through the local improvement process A, the position of the node 63 is assumed to be switched with the position PS31, and the position of the node 31 is assumed to be switched with the position PS52 (see FIG. 22 (B)).

Here, the data destinations of the node in the position PS52 are the nodes 63 and 64. Thus, the node 31 in the position PS52 is to transmit data to the node 63 in the position PS31. As a result, a loop of the data occurs among the nodes 63, 41, and 31.

Moreover, the node 52 in the position PS63 is incapable of receiving data from other nodes, and thus this causes a problem that the node 52 is isolated from the other nodes. Stated differently, when the local improvement processes A and B are performed independently of each other and simultaneously, it is impossible to maintain the consistency of the ALM distribution tree. In short, the inconsistency of the ALM distribution tree occurs.

In reaction, Non Patent Literature 1 discloses a process of sequentially performing a local improvement process in a bottom-up (or top-down) manner (hereinafter, referred to as a sequentially performing process). Hereinafter, a process of sequentially performing the local improvement process in the bottom-up manner is referred to as a bottom-up local improvement process.

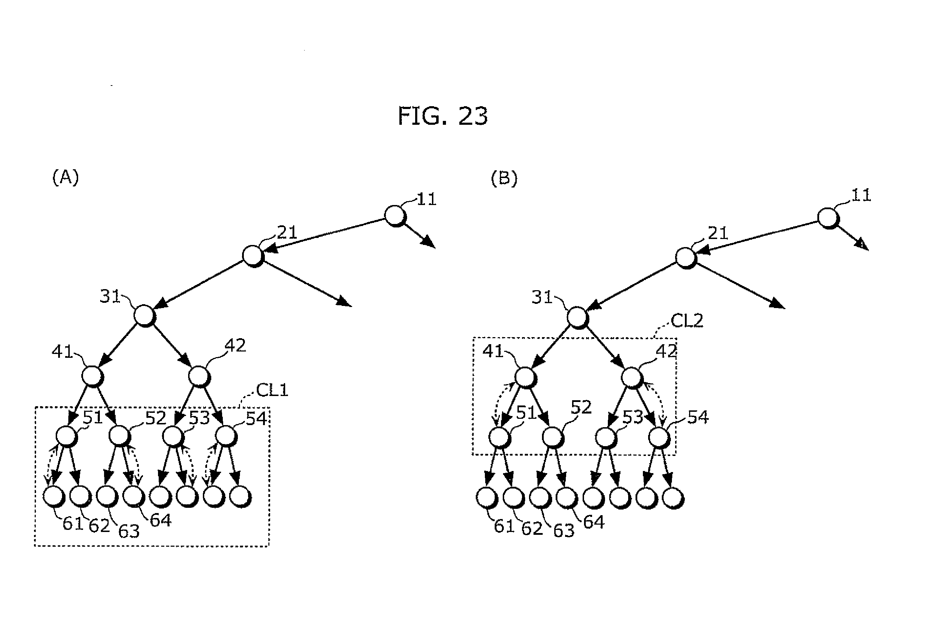

FIG. 23 is a diagram illustrating a bottom-up local improvement process. The bottom-up local improvement process is a process to be performed while causing two levels on which a local improvement process is to be performed to sequentially move from the lowest level to the highest level.

FIG. 23 (A) shows a local improvement process in a column CL1. The column CL1 is a part including the sixth level as the lowest level and the fifth level. In other words, the local improvement process in the column CL1 is a process of switching a position of a node at the sixth level as the lowest level with a position of a node at the fifth level.

When the local improvement process in the column CL1 is terminated, levels on which a local improvement process is to be performed are the fifth and fourth levels.

FIG. 23 (B) shows a local improvement process in a column CL2. The column CL2 is a part including the fifth level and the fourth level. In other words, the local improvement process in the column CL2 is a process of switching a position of a node at the fifth level with a position of a node at the fourth level.

As shown by FIG. 23 (A) and (B), in the bottom-up local improvement process, the next process (in the column CL2) is not started unless the local improvement process in the column CL1 is not completely terminated. Therefore, it is possible to maintain the consistency of the ALM distribution tree.

However, a position at which a local improvement process is performed ascends in order to a higher level, and thus this causes a problem that an ALM distribution tree cannot be immediately improved according to traffic change occurring at a given location in a network at a given time.

For example, in the example shown by FIG. 23 (A) and (B), when a network congestion occurs around the node 11 at the higher level in the ALM distribution tree, it is impossible to immediately address the network congestion until the local improvement processes in the columns CL1 and CL2 are terminated.

### [Citation List]

### [Non Patent Literature]

### [NPL 1]

"Stability Oriented Overlay Multicast for Multimedia Streaming in Multiple Source Context", Baduge, T.M., Ikeda, K, Yamaguchi, H., Higashino, T., appears in: proceedings of ICC'08, IEEE International Conference on Communications, 2008, Publication Date: 19-23 May 2008, page(s): 5708-5714

### [Summary of Invention]

### [Technical Problem]

Unfortunately, the technique disclosed by Non Patent Literature 1 has a problem that terminating local improvement processes requires time when it is necessary to perform the local improvement processes in an ALM distribution tree.

The present invention has been devised to solve the above problem, and has an object to provide a communication terminal or the like which makes it possible to immediately perform the local improvement processes in the ALM distribution tree.

### [Solution to Problem]

In order to solve the above problem, a communication terminal according to an aspect of the present invention is a communication terminal as a predetermined node among nodes as communication terminals which make up an ALM (Application Layer Multicast) distribution tree, wherein at least part of the nodes making up the ALM distribution tree performs data communication, and a data destination is preset to each of the nodes according to a position of each node in the ALM distribution tree so that data transmitted from the predetermined node is transmitted to, among the nodes, all of the nodes other than the predetermined node, the communication terminal as the predetermined node including: a generating unit which generates group formation data for forming groups among the nodes; and a transmitting unit which transmits the group formation data to a node that is a destination set to the communication terminal, wherein the generating unit converts, when a condition for grouping is satisfied, the group formation data into data for changing at least one of the number of groups and the number of nodes corresponding to each of the groups that are based on the group formation data, the transmitting unit transmits, every time the group formation data is converted, the converted group formation data to the node that is the destination set to the communication terminal, and the generating unit generates, when the number of the nodes corresponding to a group to be formed is N, where N is an integer equal to or greater than two, group formation data for forming the group in which a local improvement process of switching positions of two nodes among N nodes with each other is performed.

To put it differently, the generating unit generates the group formation data for forming the groups among the nodes making up the ALM distribution tree. The transmitting unit transmits the group formation data to the node that is the destination set to the communication terminal. The generating unit converts, when the condition for grouping is satisfied, the group formation data into the data for changing the at least one of the number of the groups and the number of the nodes corresponding to each of the groups. The transmitting unit transmits, every time the group formation data is converted, the converted group formation data to the node that is the destination set to the communication terminal. The group formation data is data for forming a group in which a local improvement process of switching positions of two nodes with each other is performed.

The data destination is preset to each of the nodes according to the position of each node in the ALM distribution tree so that the data transmitted from the predetermined node is transmitted to, among the nodes, all of the nodes other than the predetermined node. Consequently, the group formation data is transmitted from the predetermined node to the node that is the set destination, and is thus transmitted to each node. The groups are formed in the ALM distribution tree through this process. The local improvement process is performed in each of the formed groups.

As a result, it is possible to immediately perform local improvement processes in the ALM distribution tree.

Furthermore, the condition for grouping may be a condition that a predetermined period of time has passed.

With this, every time the predetermined period of time has passed, the group formation data is converted into the data for changing the at least one of the number of the groups and the number of the nodes corresponding to each group. The converted group formation data is transmitted to the node that is the set destination. For this reason, every time the predetermined period of time has passed, the at least one of the number of the groups and the number of the nodes corresponding to each group is changed. Thus, the number of groups to be formed in the ALM distribution tree and the number of the nodes corresponding to each of the groups are changed every time the predetermined period of time has passed.

Moreover, the generating unit may generate the group formation data indicating information for identifying a node located at a boundary of the group to be formed.

Furthermore, the generating unit may generate, when the number of the nodes corresponding to the group to be formed is N and traffic between the N nodes is equal to or greater than a predetermined value, the group formation data for forming the group in which the local improvement process is performed so that the traffic becomes less than the predetermined value.

With this, when the traffic becomes equal to or greater than the predetermined value, the local improvement process is performed so that the traffic becomes less than the predetermined value.

Moreover, the predetermined node may be a root node.

Furthermore, the communication terminal as the predetermined node may further include a token control unit which transmits, when the number of nodes corresponding to a group corresponding to the communication terminal is N, a token to be sequentially received by each of the N nodes, wherein the token control unit may transmit, only during a period in which one of the N nodes having received the token holds the token, the token which allows the one of the N nodes holding the token to perform the local improvement process.

With this, it is possible to limit, to one, the number of local improvement processes that can be simultaneously performed within one group.

A communication terminal according to another aspect of the present invention is a communication terminal as one of nodes as communication terminals which make up an ALM (Application Layer Multicast) distribution tree, wherein a data destination is preset to each of the nodes according to a position of each node in the ALM distribution tree, the communication terminal including: a receiving unit which receives group formation data for causing a particular node among the nodes to form a group including, among the nodes, M nodes including a self node which is the communication terminal, where M is an integer equal to or greater than two, the group formation data being data transmitted from another one of the nodes, and the group formation data indicating information for determining whether or not the self node is the particular node; a determining unit which determines whether or not the self node is the particular node based on the received group formation data; a group forming unit which forms, when the determining unit determines that the self node is the particular node, the group including the M nodes; and a local improvement unit which determines whether or not there is a change-requiring node which is a node requiring change of a data destination, among the M nodes corresponding to the group formed by the group forming unit, and wherein the local improvement unit further performs, when it is determined that there is the change-requiring node, a local improvement process of changing a data destination set to the change-requiring node with a data destination set to the another one of the nodes.

Stated differently, received is the group formation data for causing the particular node among the nodes to form the group including, among the nodes, the M nodes including the self node which is the communication terminal. When the self node is the particular node, the group including the M nodes is formed. It is determined whether or not there is the change-requiring node which is the node requiring the change of the data destination, among the M nodes corresponding to the formed group. When it is determined that there is the change-requiring node, performed is the local improvement process of changing the data destination set to the change-requiring node with the data destination set to the another one of the nodes.

Consequently, when there is the change-requiring node which is the node requiring the change of the data destination in the formed group, the local improvement process is performed in the formed group. When the number of formed groups is supposedly plural and there is the change-requiring node in each of the formed groups, the local improvement process is performed in each group. In this case, it is possible to immediately perform the local improvement processes in the ALM distribution tree.

Furthermore, the local improvement process may include a process in which at least one of data destinations of a node to which the change-requiring node is set as a data destination is changed with the another one of the nodes, and a data destination of a node to which the another one of the nodes is set as a data destination is changed with the data destination set to the another one of the nodes.

Moreover, each of the change-requiring node and the another one of the nodes may be, among the M nodes, one of the nodes except a group root node which is a highest-level node.

Furthermore, the communication terminal as the predetermined node may further include a token control unit which transmits, when the number of nodes corresponding to a group corresponding to the communication terminal is M, a token to be sequentially received by each of the M nodes, wherein the token control unit may transmit, only during a period in which one of the M nodes having received the token holds the token, the token which allows the one of the M nodes holding the token to perform the local improvement process.

With this, it is possible to limit, to one, the number of local improvement processes that can be simultaneously performed within one group.

Moreover, the local improvement unit may determine, when traffic between two nodes among the M nodes is equal to or greater than a predetermined value, at least one of the two nodes to be the change-requiring node.

With this, when the traffic becomes equal to or greater than the predetermined value, the local improvement process is performed.

A communication state change method according to yet another aspect of the present invention is a communication state change method performed by a communication terminal as a predetermined node among nodes as communication terminals which make up an ALM (Application Layer Multicast) distribution tree, wherein at least part of the nodes making up the ALM distribution tree performs data communication, and data destination is preset to each of the nodes according to a position of each node in the ALM distribution tree so that data transmitted from the predetermined node is transmitted to, among the nodes, all of the nodes other than the predetermined node, the communication state change method including: generating group formation data for forming groups among the nodes; and transmitting the group formation data to a node that is a destination set to the communication terminal, wherein in the generating, when a condition for grouping is satisfied, the group formation data is converted into data for changing at least one of the number of groups and the number of nodes corresponding to each of the groups that are based on the group formation data, in the transmitting, every time the group formation data is converted, the converted group formation data is transmitted to the node that is the destination set to the communication terminal, and in the generating, when the number of the nodes corresponding to a group to be formed is N, where N is an integer equal to or greater than two, generated is the group formation data for forming the group where a local improvement process of switching positions of two nodes among the N nodes with each other is performed.

To put it difFerently, generated is the group formation data for forming the groups among the nodes making up the ALM distribution tree. The group formation data is transmitted to the node that is the destination set to the communication terminal. When a condition for grouping is satisfied, the group formation data is converted into data for changing at least one of the number of groups and the number of nodes corresponding to each of the groups. Every time the group formation data is converted, the converted group formation data is transmitted to the node that is the destination set to the communication terminal. The group formation data is data for forming a group in which a local improvement process of switching positions of two nodes with each other is performed.

The data destination is preset to each of the nodes according to the position of each node in the ALM distribution tree so that the data transmitted from the predetermined node is transmitted to, among the nodes, all of the nodes other than the predetermined node. Consequently, the group formation data is transmitted from the predetermined node to the node that is the set destination, and is thus transmitted to each node. The groups are formed in the ALM distribution tree through this process. The local improvement process is performed in each of the formed groups.

As a result, it is possible to immediately perform local improvement processes in the ALM distribution tree.

A communication state change method according to still another aspect of the present invention is a communication state change method performed by a communication terminal as one of nodes as communication terminals which make up an ALM (Application Layer Multicast) distribution tree, wherein a data destination is preset to each of the nodes according to a position of each node in the ALM distribution tree, the communication terminal including: a receiving unit which receives group formation data for causing a particular node among the nodes to form a group including, among the nodes, M nodes including a self node which is the communication terminal, where M is an integer equal to or greater than two, the group formation data being data transmitted from another one of the nodes, and the group formation data indicating information for determining whether or not the self node is the particular node; determining whether or not the self node is the particular node based on the received group formation data; forming, when it is determined in the determining that the self node is the particular node, the group including the M nodes; and determining whether or not there is a change-requiring node which is a node requiring change of a data destination, among the M nodes corresponding to the group formed in the forming, wherein in the determining whether or not there is a change-requiring node, when it is determined that there is the change-requiring node, performed is a local improvement process of changing a data destination set to the change-requiring node with a data destination set to another one of the nodes.

To put it differently, received is the group formation data for causing the particular node among the nodes to form the group including, among the nodes, the M nodes including the self node which is the communication terminal. When the self node is the particular node, the group including the M nodes is formed. It is determined whether or not there is the change-requiring node which is the node requiring the change of the data destination, among the M nodes corresponding to the formed group. When it is determined that there is the change-requiring node, performed is the local improvement process of changing the data destination set to the change-requiring node with the data destination set to the another one of the nodes.

Consequently, when there is the change-requiring node which is the node requiring the change of the data destination in the formed group, the local improvement process is performed in the formed group. When the number of formed groups is supposedly plural and there is the change-requiring node in each of the formed groups, the local improvement process is performed in each group. In this case, it is possible to immediately perform the local improvement processes in the ALM distribution tree.

A communication state change method according to still yet another aspect of the present invention is a communication state change method which dynamically changes a communication state of data communication performed by at least part of nodes as communication terminals which make up an ALM (Application Layer Multicast) distribution tree, wherein a data destination is preset to each of the nodes according to a position of each node in the ALM distribution tree so that data transmitted from the predetermined node is transmitted to, among the nodes, all of the nodes other than the predetermined node, the communication state change method including: performing a process for forming groups among the nodes making up the ALM distribution tree; performing, every time a condition for grouping is satisfied, a process for changing at least one of the number of the formed groups and the number of the nodes corresponding to each of the groups; and performing, when there is a change-requiring node which is a node requiring change of a position of the node in each of at least two groups among the groups corresponding to two or more nodes, a local improvement process of switching a position of the change-requiring node with a position of another one of the nodes corresponding to the group corresponding to the change-requiring node.

In other words, the groups are formed among the nodes making up the ALM distribution tree. When there is the change-requiring node which is the node requiring the change of the position of the node in each of the at least two groups among the groups corresponding to the two or more nodes, performed is the local improvement process of switching the position of the change-requiring node with the position of the another one of the nodes corresponding to the group corresponding to the change-requiring node.

As a result, it is possible to immediately perform the local improvement processes in the ALM distribution tree.

### [Advantageous Effects of Invention]

The present invention makes it possible to immediately perform local improvement processes in an ALM distribution tree.

### [Brief Description of Drawings]

[FIG. 1]

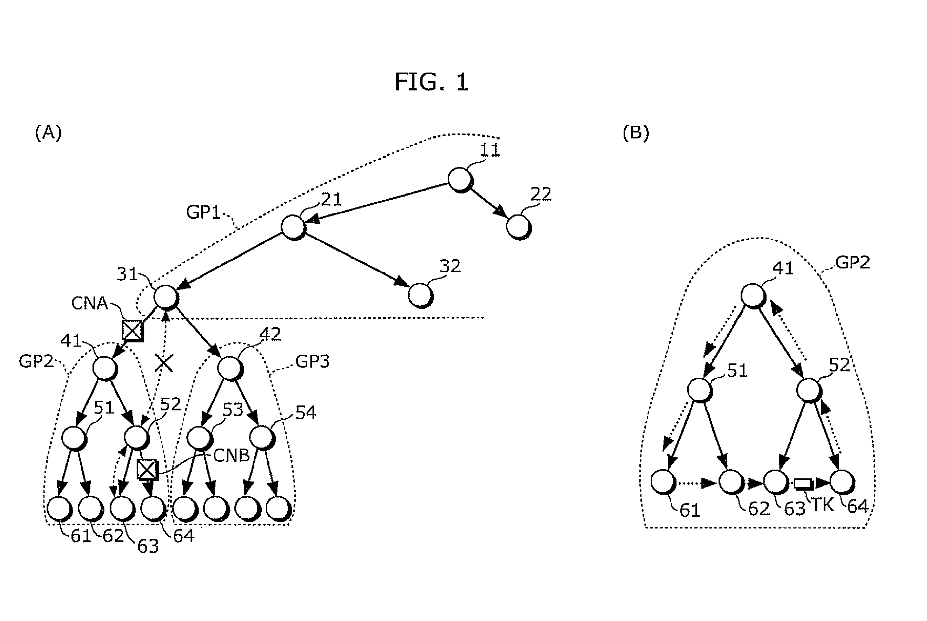

   FIG. 1 is a diagram illustrating a concept of Embodiment 1.
[FIG. 2]

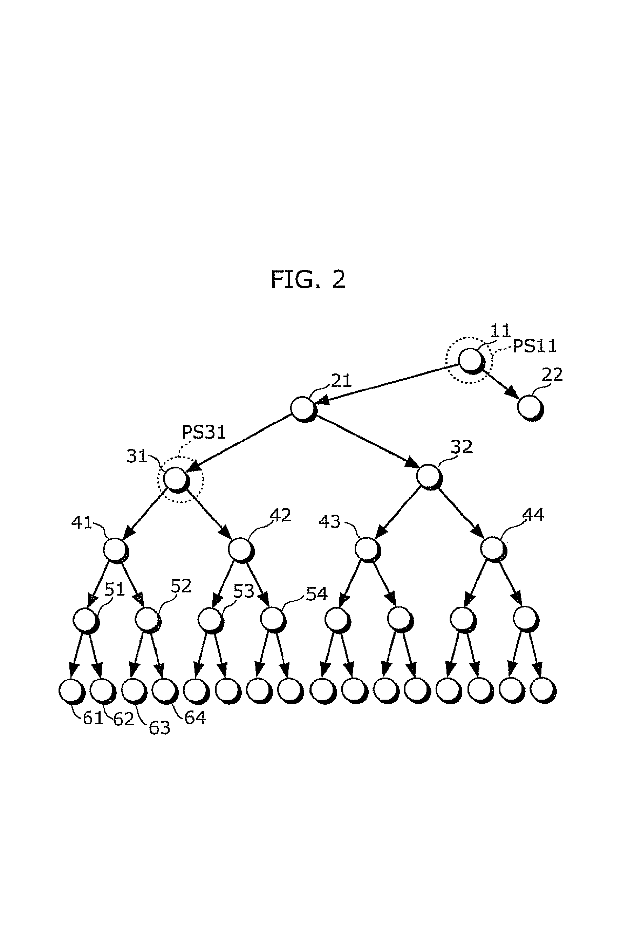

   FIG. 2 is a diagram showing an ALM distribution tree composed of nodes as communication terminals in Embodiment 1.
[FIG. 3]

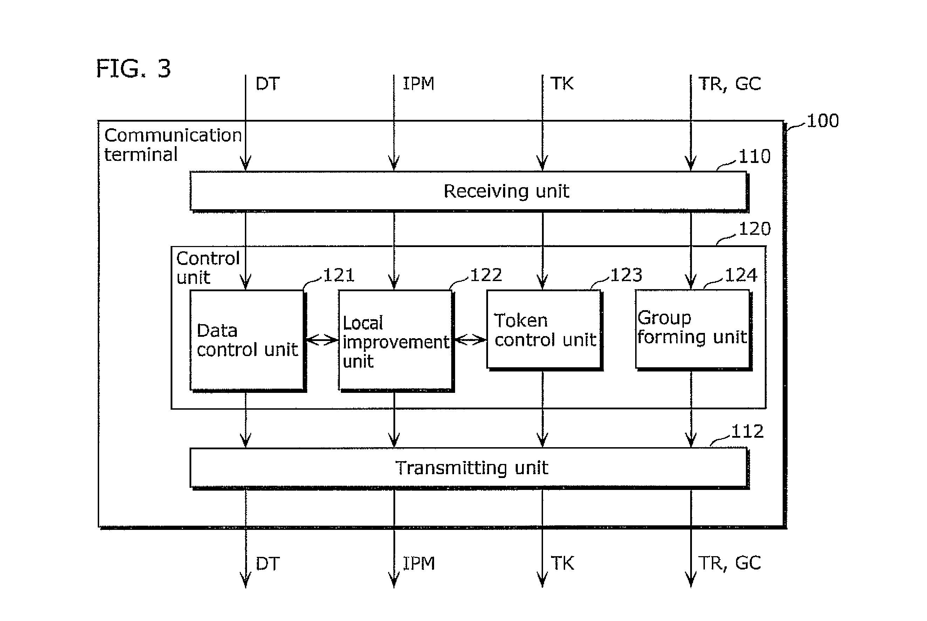

   FIG. 3 is a block diagram showing a configuration of a communication terminal.
[FIG. 4]

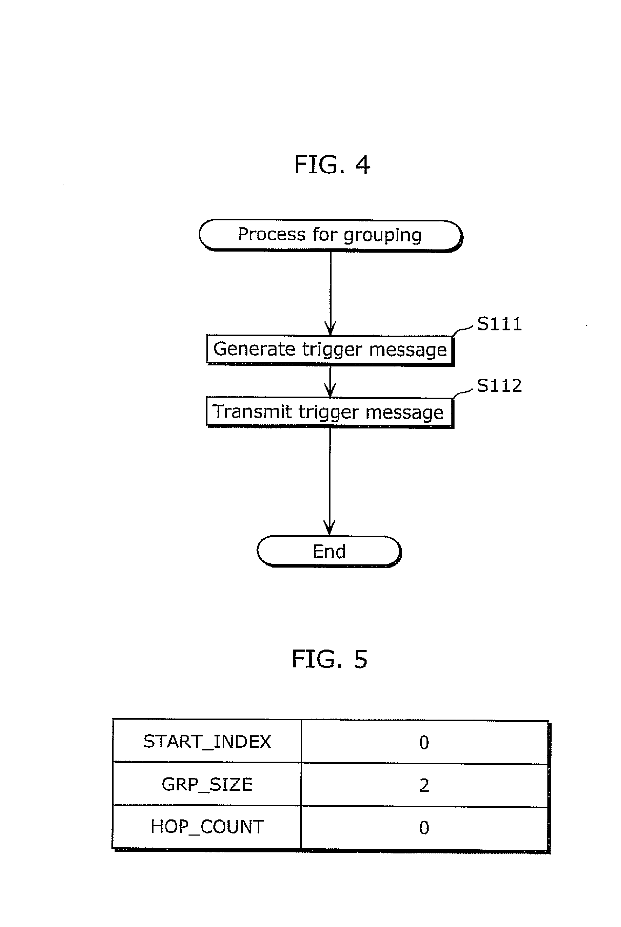

   FIG. 4 is a flowchart of a process for grouping.
[FIG. 5]
   FIG. 5 is a diagram showing an example of a trigger message.
[FIG. 6]

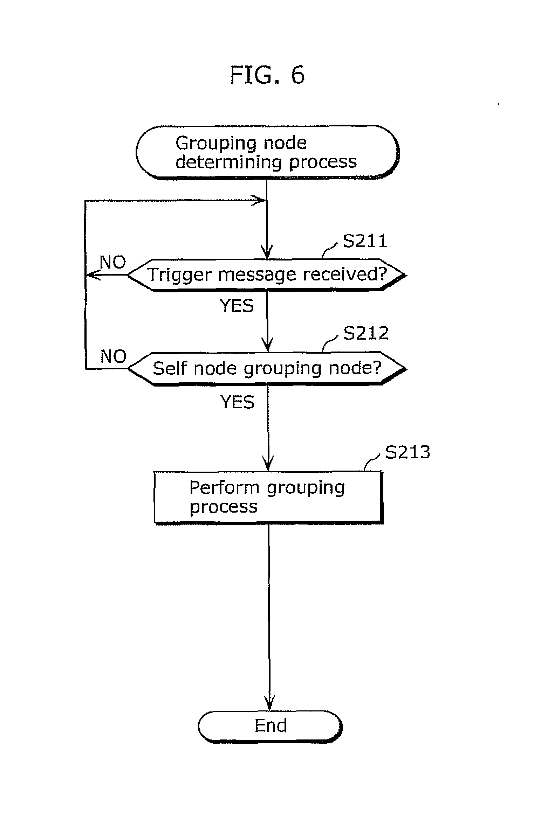

   FIG. 6 is a flowchart of a grouping node determining process.
[FIG. 7]

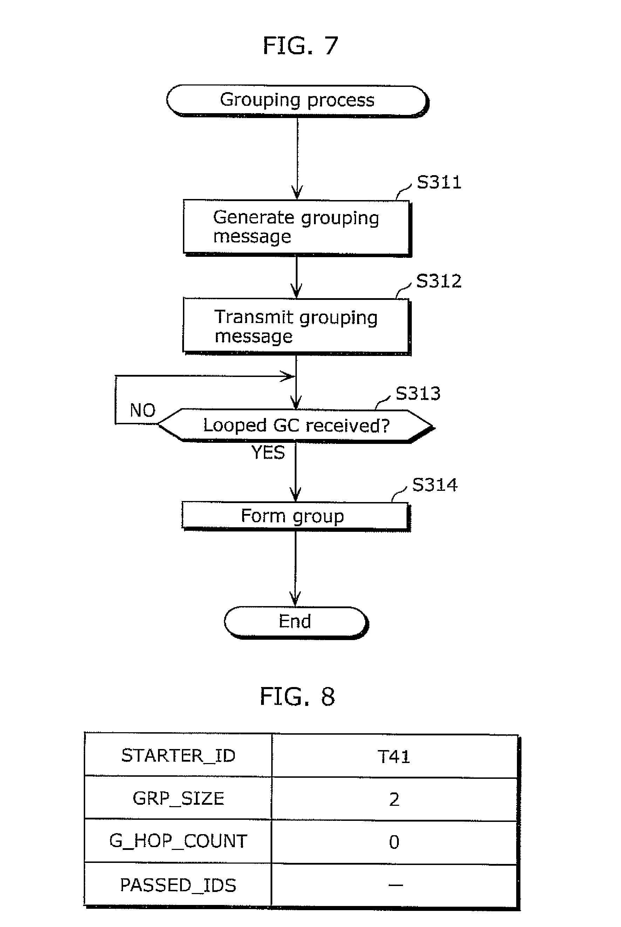

   FIG. 7 is a flowchart of a grouping process.
[FIG. 8]
   FIG. 8 is a diagram showing an example of a grouping message.
[FIG. 9]

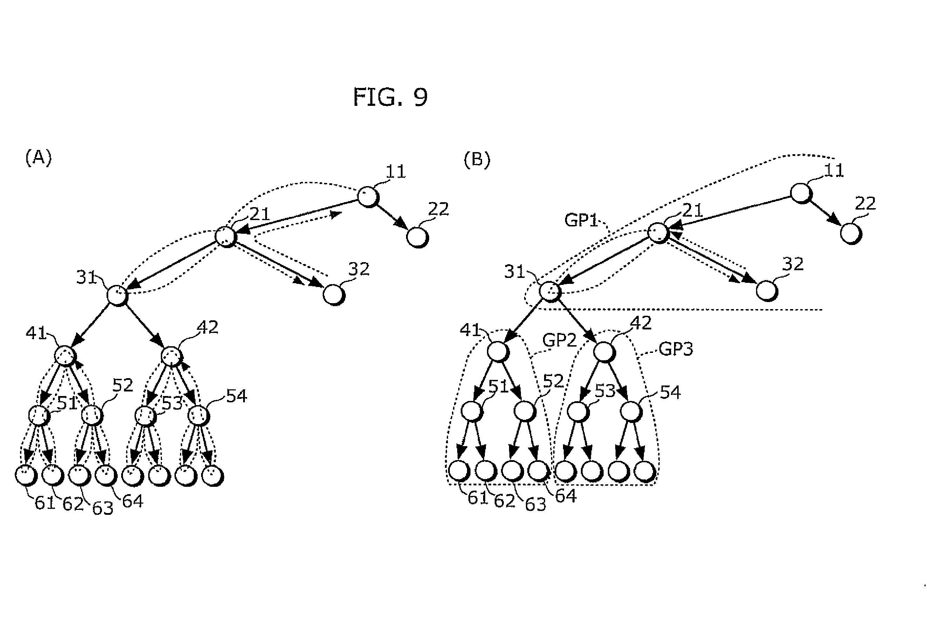

   FIG. 9 is a diagram illustrating a GC loop process.
[FIG. 10]

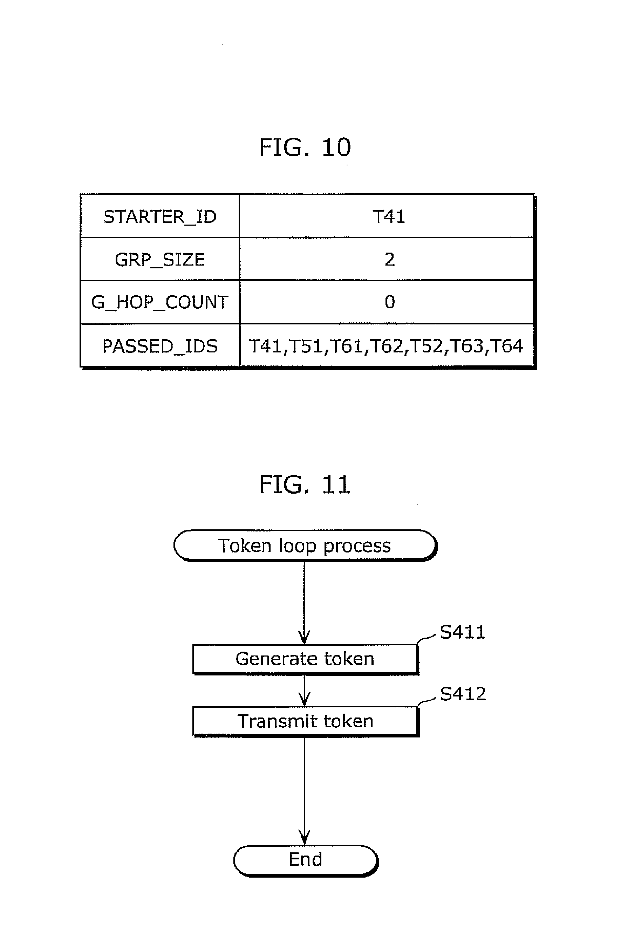

   FIG. 10 is a diagram showing an example of a looped GC.
[FIG. 11]
   FIG. 11 is a flowchart of a token loop process.
[FIG. 12]

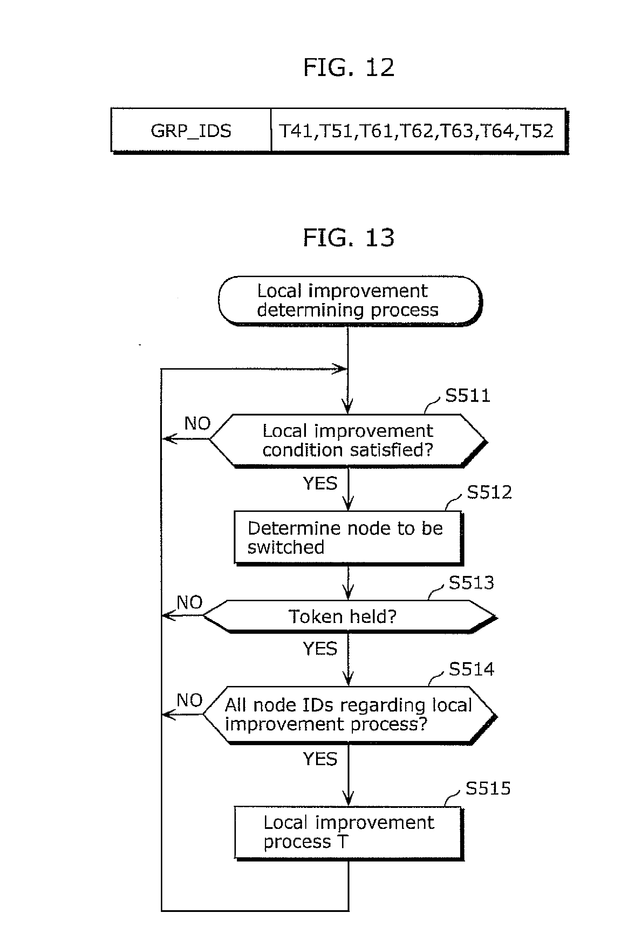

   FIG. 12 is a diagram showing an example of a token.
[FIG. 13]
   FIG. 13 is a flowchart of a local improvement determining process.
[FIG. 14]

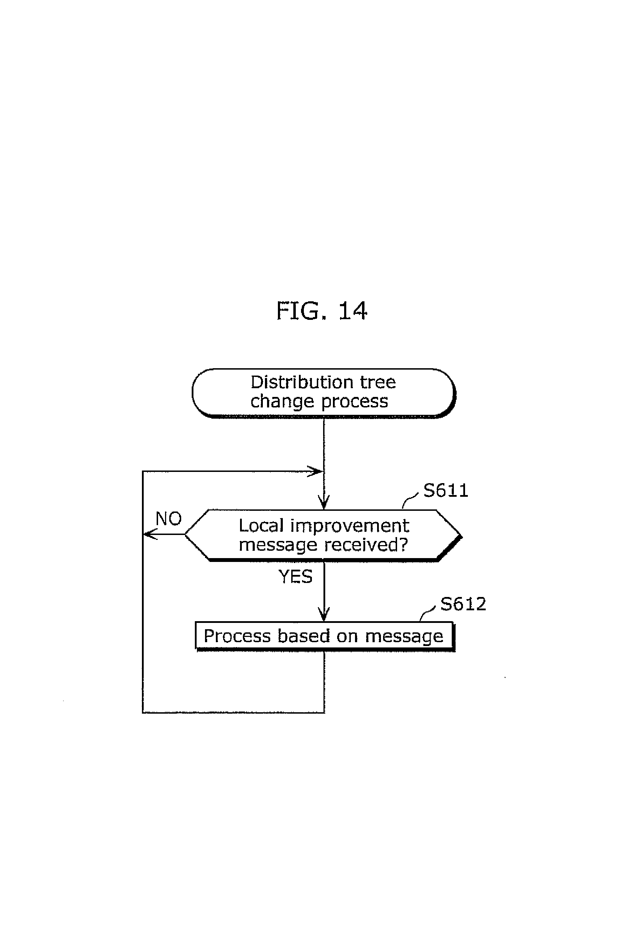

   FIG. 14 is a flowchart of a distribution tree change process.
[FIG. 15]

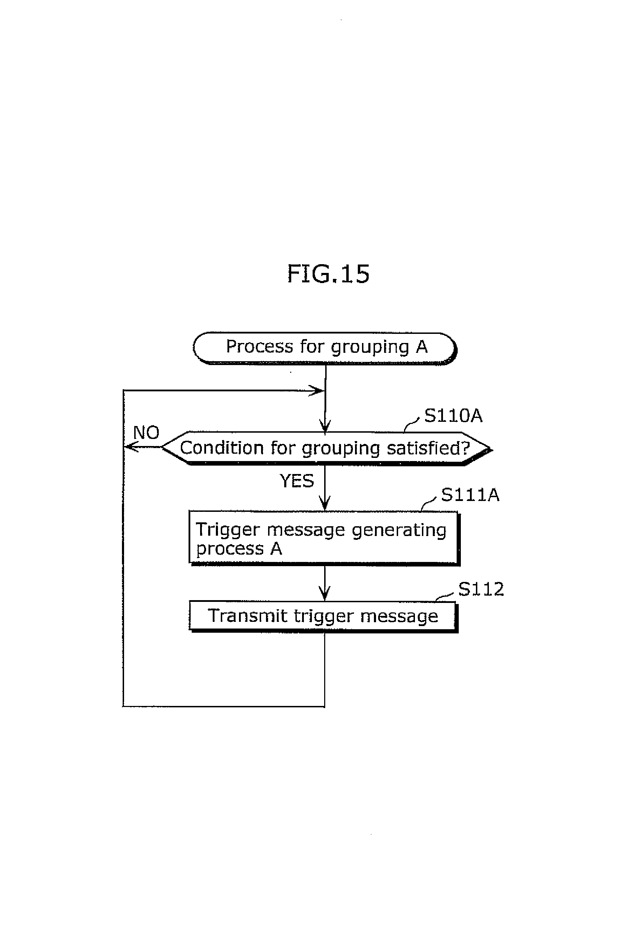

   FIG. 15 is a flowchart of a process for grouping A.
[FIG. 16]

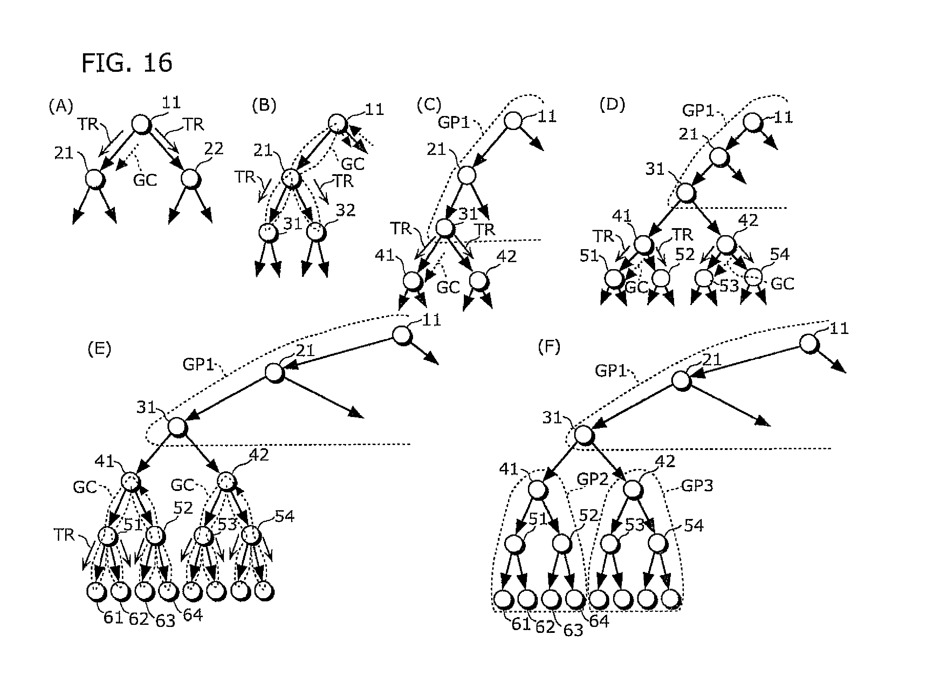

   FIG. 16 is a diagram illustrating a process of forming a group in an ALM distribution tree.
[FIG. 17]

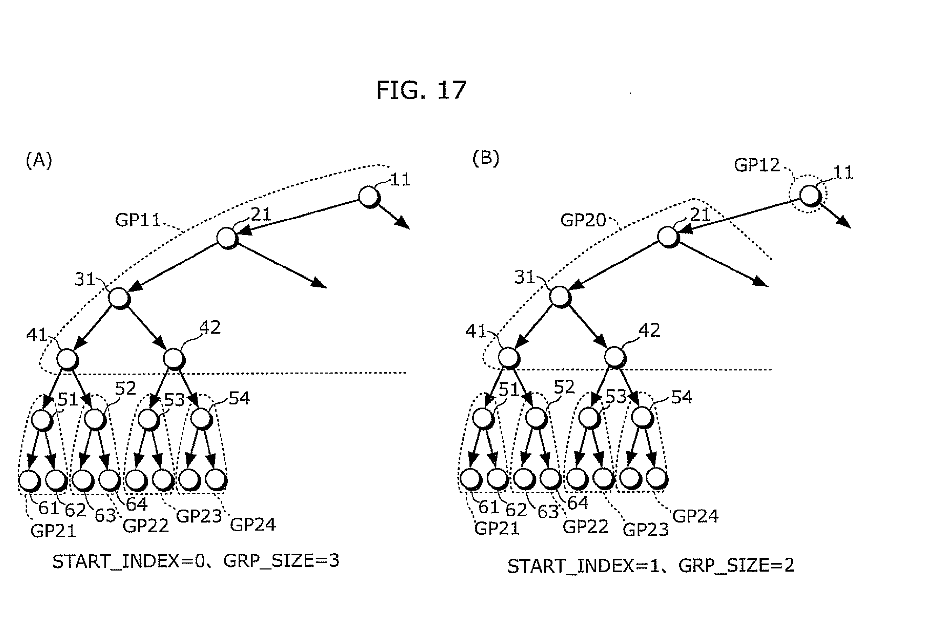

   FIG. 17 is a diagram showing an example of groups formed in an ALM distribution tree.
[FIG. 18]

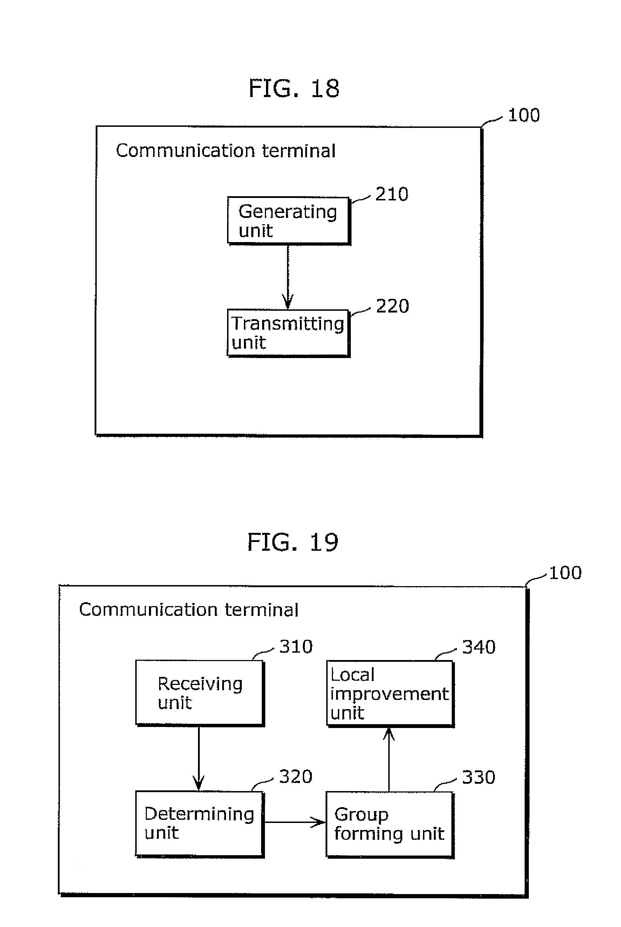

   FIG. 18 is a block diagram showing a first functional configuration characteristic to a communication terminal according to the present invention.
[FIG. 19]
   FIG. 19 is a block diagram showing a second functional configuration characteristic to a communication terminal according to the present invention.
[FIG. 20]
   FIG. 20 is a diagram illustrating an ALM distribution tree.
[FIG. 21]
   FIG. 21 is a diagram illustrating a local improvement process.
[FIG. 22]
   FIG. 22 is a diagram illustrating that consistency of an ALM distribution tree cannot be maintained.
[FIG. 23]
   FIG. 23 is a diagram illustrating a bottom-up local improvement process.

### [Description of Embodiments]

The following describes an embodiment of the present invention with reference to the drawings. In the following description, the same numerical references are assigned to the same components. Their names and functions are the same. Thus, detailed descriptions of those are not repeated.

### <Embodiment 1>

### (Summary of the Present Invention)

FIG. 1 is a diagram illustrating a concept of Embodiment 1. FIG. 1 (A) shows a situation where groups (groups GP1, GP2, and GP3) are formed in an ALM distribution tree composed of nodes through a process of Embodiment 1. It is to be noted that a process for forming a group is to be described later.

In the present embodiment, the following rules D1 and D2 are established for the groups formed in the ALM distribution tree. The following rules D1 and D2 are notified in advance to each of nodes making up the ALM distribution tree. Thus, each node making up the ALM distribution tree performs a process according to the rules D1 and D2.

The rule D1 is a rule which prohibits a local improvement process of switching positions of two nodes between two different groups.

For example, a local improvement process of switching a position of the node 31 corresponding to a group GP1 with a position of the node 52 corresponding to a group GP2 is not performed according to the rule D1. Consequently, as illustrated by FIG. 22 (A), even when the network congestion CNA and the network congestion CNB simultaneously occur, the above-mentioned local improvement process A is not performed, and only the above-mentioned local improvement process B is performed.

As a result, as illustrated by FIG. 22 (A) and (B), it is possible to increase a possibility of preventing the inconsistency of the ALM distribution tree from occurring when the local improvement processes A and B are simultaneously performed.

However, there is a possibility according to only the rule D1 that local improvement processes are simultaneously performed within the same group, and it is impossible to completely prevent the inconsistency of the ALM distribution tree from occurring.

In response, the present invention further establishes the rule D2.

The rule D2 is a rule which limits, to one, the number of local improvement processes that can be simultaneously performed within the same group. It is possible to completely prevent the inconsistency of the ALM distribution tree from occurring according to the rules D1 and D2.

As a specific process, a token is looped in each of the groups, and an execution authority of a local improvement process is given to a node holding the token only during a period in which the node which has received the token holds the token. Hereinafter, the token is also referred to as a token TK.

FIG. 1 (B) illustrates a situation where the token TK is looped. FIG. 1 (B) illustrates the situation where the token TK is looped in the group GP2 shown by FIG. 1 (A), but the token TK loops in other groups in the same manner as in the group GP2. It is to be noted that a process for looping the token TK will be described later.

### (Structure of ALM Distribution Tree)

FIG. 2 is a diagram showing an ALM distribution tree composed of nodes as communication terminals in Embodiment 1. It is to be noted that the ALM distribution tree shown in FIG. 2 is constructed with a general ALM distribution tree construction method.

The ALM distribution tree shown in FIG. 2 has, for instance, six levels in a hierarchy. For example, the node 11 is a node at the first level in the hierarchy. Hereinafter, the node at the first level is referred to as a root node. In other words, a node at the highest level of the ALM distribution tree is the root node. In short, the node 11 is the root node.

For instance, the nodes 21 and 22 are nodes at the second level in the hierarchy. For example, the nodes 31 and 32 are nodes at the third level in the hierarchy. For instance, the nodes 61 to 64 are nodes at the sixth level in the hierarchy. The nodes 61 to 64 are nodes at the lowest level in the hierarchy.

Hereinafter, with respect to a node at a level in the ALM distribution tree, a node at one level higher than the level is referred to as a parent node or an immediately-superior node. For example, the node 11 shown in FIG. 2 is a parent node (immediately-superior node) of the nodes 21 and 22.

Furthermore, hereinafter, with respect to a node at a level in the ALM distribution tree, a node at a level higher than the level is referred to as a superior node. For instance, the nodes 11, 21, and 31 shown in FIG. 2 are superior nodes of either the node 41 or the node 42.

Moreover, hereinafter, with respect to a node at a level in the ALM distribution tree, a node at one level lower than the level is referred to as a child node or an immediately-inferior node. For example, the nodes 21 and 22 shown in FIG. 2 are child nodes (immediately-inferior nodes) of the node 11.

Furthermore, hereinafter, with respect to a node at a level in the ALM distribution tree, a node at a level lower than the level is referred to as an inferior node. For instance, the nodes 21, 22, 31, 32, 41 to 44, 51 to 54, and 61 to 64 shown in FIG. 2 are inferior nodes of the node 11. For example, the nodes 41, 42, 51 to 54, and 61 to 64 shown in FIG. 2 are inferior nodes of the node 31.

Moreover, hereinafter, a node at the lowest level in the ALM distribution tree is referred to as a lowest-level node or a leaf node. Stated differently, the lowest-level node or the leaf node includes no child node.

Data destinations are preset to each node making up the ALM distribution tree shown in FIG. 2 according to a position of each node in the ALM distribution tree. In other words, the data destinations are preset to each node making up the ALM distribution tree according to the position of each node so that data transmitted from the root node is transmitted to all the nodes other than the root node.

For instance, the data destinations of the node 11 in the position PS11 are set to the nodes 21 and 22. For example, the data destinations of the node 31 in the position PS31 are set to the nodes 41 and 42.

Furthermore, an ID (hereinafter, referred to as a node ID) for specifying a node is set to each node making up the ALM distribution tree. The node ID is expressed as, for instance, Tm (m: natural number). When there are nodes at the same level, a value m of the node ID increases starting from the leftmost node. For example, node IDs of the nodes 51 to 54 are T51, T52, T53, and T54, respectively.

Node IDs of the nodes 11, 21, 22, 31, and 32 shown in FIG. 2 are T11, T21, T22, T31, and T32, respectively. Moreover, node IDs of the nodes 41 to 44 and 51 to 54 are T41 to T43 and T51 to T54, respectively. Furthermore, node IDs of the nodes 61 to 64 are T61 to T64, respectively.

Each node shown in FIG. 2 has the following configuration of a communication terminal 100.

### (Device Configuration)

FIG. 3 is a block diagram showing a configuration of a communication terminal 100. As shown in FIG. 3, the communication terminal 100 includes a receiving unit 110, a control unit 120, and a transmitting unit 112.

The receiving unit 110 receives various data from other communication terminals (nodes).

The control unit 120 includes a data control unit 121, a local improvement unit 122, a token control unit 123, and a group forming unit 124.

The transmitting unit 112 transmits data based on an instruction from the outside (e.g., the data control unit 121).

The data control unit 121 transmits, to an external communication terminal (node), data DT obtained by replicating data DT received from another communication terminal (node), using the transmitting unit 112. In addition, every time the data control unit 121 receives the data DT, the data control unit 121 notifies the local improvement unit 122 of a data amount of the received data DT and information about a node which transmitted the received data DT. This enables the local improvement unit 122 to always recognize traffic between a self terminal (self node) and another node.

The group forming unit 124 forms groups among the nodes making up the ALM distribution tree.

The token control unit 123 generates a token TK. In addition, after holding a token TK received from the outside for a predetermined period of time (e.g., 1 second), the token control unit 123 transmits the token TK to another node.

As will hereinafter be described in detail, the local improvement unit 122 determines whether or not it is necessary to perform a local improvement process. When determining that it is necessary to perform the local improvement process, the local improvement unit 122 transmits a local improvement message IPM, which is described later, to a target node. In addition, upon receiving the local improvement message IPM, which is described later, the local improvement unit 122 performs the local improvement process.

It is to be noted that a process performed by each of components will be described in detail later.

### (Group Formation)

The following describes a process for forming groups in a constructed ALM distribution tree through a non-centralized process (hereinafter, referred to as a process for grouping). The communication terminal 100 that is the node 11 as the root node performs the process for grouping. It is to be noted that the communication terminal 100 that is any node other than the root node may perform the process for grouping below.

FIG. 4 is a flowchart of a process for grouping.

In step S111, the group forming unit 124 generates a trigger message TR.

FIG. 5 is a diagram showing an example of a trigger message TR. In FIG. 5, "START_INDEX" indicates a value for determining a grouping node. The grouping node is a node which performs a process for forming a group. When the value indicated by START_INDEX is "0", at least a root node as a node at the highest level is the grouping node. The trigger message TR is group formation data for causing the grouping node as a particular node to form a group.

In FIG. 5, "GRP_SIZE" indicates a size of a group to be formed according to the trigger message TR (hereinafter, referred to as a group size). When a value indicated by the group size GRP_SIZE is k (natural number), a group including all nodes that are reachable in k hops from the grouping node toward a direction of inferior node in an ALM distribution tree is the group to be formed according to the group size GRP_SIZE. It is to be noted that a child node or a parent node of a node is reached in one hop from the node.

For example, it is assumed that the grouping node is the node 11, and group size GRP_SIZE indicates "2". In this case, nodes that are reachable in two hops from the node 11 toward a direction of inferior node are the nodes 21, 22, 31, and 32, in the ALM distribution tree shown in FIG. 2. In this case, one group is formed by the nodes 21, 22, 31, and 32.

In FIG. 5, "HOP_COUNT" is a counter for counting the number of hops. A value of the counter HOP_COUNT is incremented by "1" every time a trigger message TR makes one hop from a node toward the direction of inferior node. In addition, the value of the counter HOP_COUNT is decremented by "1" every time the trigger message TR makes one hop from the node toward the direction of superior node. It is to be noted that an initial value of the counter HOP_COUNT is "0".

With reference to FIG. 4 again, in step S112, the group forming unit 124 transmits the generated trigger message TR to data destinations set to the self terminal, using the transmitting unit 112. It is to be noted that when a destination of the trigger message TR is a child node, the group forming unit 124 transmits, to the child node, the trigger message TR for which a value of counter HOP_COUNT indicated by the trigger message TR is incremented by "1".

Here, it is assumed that data destinations set to the self terminal are the nodes 21 and 22 as child nodes. In this case, the trigger message TR for which the value of the counter HOP_COUNT is incremented by "1" is transmitted to the nodes 21 and 22.

Hereinafter, a node that has received the trigger message TR is referred to as a trigger-message-received node.

Among the nodes making up the ALM distribution tree, the trigger-message-received node other than the lowest-level nodes performs the following trigger message transmission process.

In the trigger message transmission process, the trigger-message-received node (e.g., the node 21) transmits the received trigger message TR to nodes (e.g., the nodes 31 and 32) that are data destinations set to the trigger-message-received node itself. It is to be noted that when a destination of the trigger message TR is a child node, the trigger-message-received node transmits, to the child node, the trigger message TR for which a value of counter HOP_COUNT indicated by the trigger message TR is incremented by "1".

Each of the nodes other than the lowest-level nodes performs the above-mentioned trigger message transmission process, and thus the trigger message TR transmitted from the node 11 as the root node is transmitted to the nodes making up the ALM distribution tree shown in FIG. 2. In this case, for instance, the value of the counter HOP_COUNT indicated by the trigger message TR received by the node 61 that is the lowest-level node is "5".

### (Determination of Grouping Node)

Each of the nodes making up the ALM distribution tree shown in FIG. 2 performs the following grouping node determining process independently of other processes.

FIG. 6 is a flowchart of a grouping node determining process.

In step S211, it is determined whether or not the group forming unit 124 has received the trigger message TR from another node. When YES in the step S211, the process advances to step S212. On the other hand, when NO in the step S211, the step S211 is performed again. It is to be noted that the root node (e.g., the node 11) does not perform the step S211, and starts the step S212.

Here, assuming that the trigger message TR has been received, the process advances to the step S212.

In the step S212, the group forming unit 124 determines whether or not a self node (communication terminal) including the group forming unit 124 is a grouping node. The grouping node is a node which performs the process for forming a group which is described later.

The following Equation 1, determines whether or not the self node is the grouping node.
(HOP_COUNT - START_INDEX) % (GRP_SIZE + 1) Equation 1 Equation 1 is an equation which calculates a remainder obtained by dividing (HOP_COUNT - START_INDEX) by (GRP_SIZE + 1). It is to be noted that START_INDEX < GRP_SIZE + 1 is satisfied in Equation 1. The received trigger message TR indicates each of values of HOP_COUNT, START_INDEX, and GRP_SIZE.

More specifically, when a value calculated by Equation 1 is "0", the group forming unit 124 determines that the self node is the grouping node. When the value calculated by Equation 1 is not "0", the group forming unit 124 determines that the self node is not the grouping node.

In other words, the group forming unit 124 determines whether or not the self node is a particular node (grouping node) based on each value indicated by the trigger message TR as the received group formation data. To put it differently, the group forming unit 124 determines whether or not the self node is the particular node (grouping node) based on the trigger message TR as the received group formation data.

When YES in the step S212, the process advances to step S213. On the other hand, when NO in the step S212, the step S211 is performed again.

Here, it is assumed that the node 11 shown in FIG. 2 has transmitted a trigger message TR to a node, which is a data destination, through the above-mentioned process for grouping. Furthermore, it is assumed that a node (communication terminal) performing the grouping node determining process is the node 41. Moreover, it is assumed that the trigger message TR received by the node 41 indicates HOP_COUNT "3", START_INDEX "0", and GRP_SIZE "2".

In this case, a value obtained from Equation 1 is "0". Here, the node 41 determines that the self node (node 41) is the grouping node. Stated differently, it is determined YES in the step S212, and the process advances to step S213.

It is to be noted that a method for determining whether or not the self node is the grouping node is not limited to the method using the above Equation 1, and may be any other method. For example, the other method is a method using an equation which is different from Equation 1 and uses two of HOP_COUNT, START_INDEX, and GRP_SIZE.

In the step S213, the group forming unit 124 included in the grouping node (communication terminal 100) performs the grouping process. To put it differently, the grouping process is performed by the grouping node. The grouping process is a process performed independently of other processes. Hereinafter, the grouping node is referred to as a group root node.

FIG. 7 is a flowchart of a grouping process.

In step S311, the group forming unit 124 generates a grouping message GC, using a part of the value indicated by the trigger message TR received through the above-mentioned grouping node determining process.

FIG. 8 is a diagram showing an example of a grouping message GC. Hereinafter, the grouping message GC may be simply referred to as a GC. In FIG. 8, "STARTER_ID" indicates a node ID of a group root node. For instance, when the group root node is the node 41, STARTER_ID is set to "T41".

"GRP_SIZE" has been described with reference to FIG. 5, and thus a detailed description of the same is not repeated. A value of GRP_SIZE indicated by a GC is set to the value of GRP_SIZE indicated by the trigger message TR received by the group root node.

In FIG. 8, "G_HOP_COUNT" is a counter for counting the number of hops. A value of the counter G_HOP_COUNT is incremented by "1" every time a GC makes one hop from a node toward the direction of inferior node. In addition, the value of the counter G_HOP_COUNT is decremented by "1" every time the GC makes one hop from the node toward the direction of superior node. It is to be noted that an initial value of the counter G_HOP_COUNT is "0".

In FIG. 8, "PASSED_IDS" is passed node information indicating a node which has received the GC. The node which has received the GC adds the node ID of the self node to an item of the passed node information PASSED_IDS of the GC, and transmits the GC to another ID.

In other words, the GC is generated using the value of GRP_SIZE indicated by the trigger message TR. In short, the GC is generated based on the trigger message TR.

Furthermore, the following rules P1 to P4 are described in a grouping message GC.

Rule P1: When G_HOP_COUNT < GRP_SIZE holds true and a self node is a group root node or when a node of a transmission source of a GC received by the self node is a parent node of the self node, a generated or received GC is transmitted (forwarded) to a child node having a node ID indicating the smallest number. It is to be noted that when transmitting the GC, a node ID of the self node is added to an item of passed node information PASSED_IDS of the GC.

Rule P2: When G_HOP_COUNT = GRP_SIZE holds true and a node of a transmission source of a GC received by a self node is a parent node of the self node, the GC is transmitted (forwarded) to the parent node. It is to be noted that when transmitting the GC, the node ID of the self node is added to the item of passed node information PASSED_IDS of the GC.

Rule P3: When a node of a transmission source of a GC received by a self node is a child node of the self node and there is a child node to which the GC has not been transmitted, the GC is transmitted (forwarded) to a child node having a node ID that is a node ID other than a node ID indicated by passed node information PASSED_IDS and indicates the smallest number.

Rule P4: When a node of a transmission source of a GC received by a self node is a child node of the self node and there is no child node to which the GC has not been transmitted, the GC is transmitted (forwarded) to a parent node of the self node.

It is to be noted that when there is no child node to which the GC has not been transmitted and the node which has received the GC is the group root node (the node ID of the self node = STARTER_ID), a GC loop process described blow is terminated. Stated differently, when the group root node receives a looped GC, the GC loop process is terminated. The looped GC is a GC which goes through all nodes other than a group root node which correspond to a group corresponding to the group root node which has transmitted the GC to a child node.

With reference to FIG. 7 again, in step S312, the grouping message is transmitted. More specifically, the group forming unit 124 transmits the generated GC to a child node according to the rule P1 described in the GC, using the transmitting unit 112.

Here, it is assumed that a group root node which performs the step S312 is the node 41. In addition, it is assumed that STARTER_ID, GRP_SIZE, G_HOP_COUNT, and PASSED_IDS indicated by the generated GC indicate information or values shown in FIG. 8.

In this case, the node 41 as the group root node transmits the GC to the node 51 that is a child node having a node ID indicating the smallest number, according to the rule P1. In this case, the node 41 adds a node ID "T41" of the node 41 to the GC to be transmitted to the node 51.

It is to be noted that when the node 41 transmits the GC to the node 51 that is the child node, the node 41 transmits, to the node 51, the GC for which a value of G_HOP_COUNT indicated by the GC is incremented by "1".

In step S313, the group forming unit 124 determines whether or not the above-mentioned looped GC has been received. When YES in the step S313, the process advances to step S314. On the other hand, when NO in the step S313, the step S313 is performed again.

### (Loop of GC)

The following describes the GC loop process in which a GC generated by a group root node loops to each node. It is to be noted that a node which has received the GC performs a process according to one of the above-mentioned rules P1 to P4 which corresponds to a state of the node, the rules being described in the GC.

FIG. 9 is a diagram illustrating a GC loop process. In the present embodiment, the GC loop process is described, assuming, as an example, that the node 41 as the group root node transmits a GC to the node 51. FIG. 9 (A) shows a situation where a GC loops to each node. Hereinafter, the GC loop process is described with reference to FIG. 9 (A). It is to be noted that it is assumed that the node 41 adds the node ID "T41" to the GC which the node 41 is to transmit to the node 51.

It is to be noted that in the following GC loop process, when transmitting a GC to a child node, each node increments a value of counter G_HOP_COUNT by "1". In addition, in the GC loop process, when transmitting the GC to a parent node, each node decrements the value of the counter G_HOP_COUNT by "1".

In the GC loop process, first, the node 51 transmits the received GC to the node 61 according to the rule P1. In this case, the node 51 adds a node ID "T51" of the node 51 to the GC to be transmitted to the node 61.

The node 61 transmits the received GC to the node 51 according to the rule P2. In this case, the node 61 adds a node ID "T61" of the node 61 to the GC to be transmitted to the node 51.

The node 51 transmits the received GC to the node 62 according to the rule P3.

The node 62 transmits the received GC to the node 51 according to the rule P2. In this case, the node 62 adds a node ID "T62" of the node 62 to the GC to be transmitted to the node 51.

Then, the node 51 transmits the received GC to the node 41 according to the rule P4. Then, the node 41 transmits the received GC to the node 52 according to the rule P3.

Further, each of the nodes 52, 63, and 64 performs the above process, and thus the node 41 as the group root node finally receives the GC (looped GC) from the node 52. Then, the node 41 terminates the GC loop process according to the rule P4. In this case, the GC received by the node 41 as the group root node is the looped GC.

Moreover, in this case, the node 41 as the group root node has received the looped GC. In this case, it is determined YES in the step S313 shown in FIG. 7, and the process advances to step S314.

As will hereinafter be described in detail, in the step S314, the group forming unit 124 forms a group based on the received looped GC.

FIG. 10 is a diagram showing an example of a looped GC. Passed node information PASSED_IDS shown in FIG. 10 shows, as node IDs of passed nodes, T41, T51, T61, T62, T52, T63, and T64. In other words, the passed node information PASSED_IDS shown in FIG. 10 shows a node ID of each of all of inferior nodes of the node 41 as the group root node.

Consequently, it is clear from the looped GC shown in FIG. 10 that the GC has been transmitted to all of the nodes having the node IDs T41, T51, T61, T62, T52, T63, and T64. It is to be noted that the rules P1 to P4 ensure that there is no overlapping node ID among node IDs indicated by passed node information PASSED_IDS.

In this case, the node 41 as the group root node which has received the looped GC shown in FIG. 10 forms one group including nodes each corresponding to a corresponding one of the node IDs indicated by the passed node information PASSED_IDS of the looped GC (S314).

More specifically, the group forming unit 124 of the group root node transmits group information to each of the nodes corresponding to the corresponding one of the node IDs shown by the looped GC. As a result, the group is formed. Here, the group information indicates group specifying information and node information. The group specifying information is information which specifies a group. The group specifying information indicates, for instance, a group number. The node information indicates node IDs shown by a looped GC.

Each node which has received the group information from the group root node makes it possible to recognize a group corresponding (belonging) to a self node and nodes included in the group, by referring to the group number indicated by the group specifying information and the node IDs indicated by the node information. Accordingly, the group is formed. In other words, the group forming unit 124 forms the group using the looped GC.

It is to be noted that the group forming process in the step S314 is not limited to the above process, and may be any other process. For example, a group may be formed without using a GC and a looped GC. Hereinafter, a process in which a group is formed without using a GC and a looped GC is referred to as a grouping process N.

When the grouping process N is performed in the step S314, the steps S311 to S313 are not performed and only the step S314 is performed in the grouping process shown in FIG. 7. In this case, the GC loop process is not performed.

In the grouping process N, the group forming unit 124 of the group root node forms the group using the received trigger message TR (group formation data).

More specifically, in the grouping process N, the group forming unit 124 of the group root node forms the group by transmitting the group information to each of inferior nodes at a level which corresponds to the value of GRP_SIZE indicated by the trigger message TR and which is lower than a level of the self node. The group information indicates the group specifying information and the node information.

It is to be noted that in this case, it is assumed that the group root node obtains in advance the node ID of each node that is at a level lower than the level of the self through previous communication or the like. In this case, unlike the above-mentioned node information, node information indicated by group information indicates a node ID of the group root node and a node ID of each of nodes that are destinations of the group information. Group specifying information is the same as the above-mentioned group specifying information.

Here, as an example, it is assumed that a group root node is the node 41. In addition, it is assumed that a value of GRP_SIZE indicated by a trigger message TR is "2". In this case, a level of a self node (group root node) is the fourth level. Furthermore, in this case, levels corresponding to the above-mentioned value of GRP_SIZE are two levels. To put it differently, the levels which are lower than the level of the self node and correspond to the value of GRP_SIZE indicated by the trigger message TR are the fifth and sixth levels.

Stated differently, in this case, the group forming unit 124 of the node 41 forms a group by transmitting the group information to each of nodes at the fifth and sixth levels.

Here, it is assumed that the nodes 11 and 42 are group root nodes. Moreover, it is assumed that each of the nodes 11 and 42 performs the grouping node determining process of FIG. 6 and the grouping process of FIG. 7 which are performed by the node 41 as the group root node. Furthermore, it is assumed that each of nodes which received a GC performs the above-mentioned GC loop process. In this case, groups are formed among the nodes making up the ALM distribution tree. It is to be noted that when the above-mentioned grouping process N is performed, the GC loop process is not performed.

FIG. 9 (B) shows an example of formed groups. A group GP2 is a group formed by receiving, by the node 41 as the group root node, the looped GC shown in FIG. 10. It is to be noted that when the above-mentioned grouping process N is performed, the group GP2 is a group formed through the grouping process N.

A group GP1 is a group formed through the step S314 performed by the node 11 as the group root node. A group GP3 is a group formed through the step S314 performed by the node 42 as the group root node.

As shown by FIG. 9 (B), the nodes 41 and 42 as the group root nodes are nodes positioned at boundaries of corresponding groups.

It is to be noted that according to the rules P1 and P3, when the GC is transmitted to the child node, the GC is transmitted to the child node having the node ID indicating the smallest number. However, the present invention is not limited to the above, and the GC may be transmitted to a child node having a node ID indicating the largest number. To put it differently, a child node to be a destination of the GC may be selected in descending order of numbers indicated by node IDs. In addition, the child node to be the destination of the GC may be randomly selected.

It is to be noted that as stated above, node IDs may be collected by inquiring adjacent nodes without looping the GC or nodes reachable in hops may be inquired about the node IDs.

It is to be noted that in the above group forming method, groups may be formed through a centralized process (by the centralized management server) and information may be disseminated to each of the groups. In addition, group formation may be performed through a method in which the non-centralized process and the centralized process are intermingled.

### (Loop of Token)

The following describes a process for looping the token TK illustrated by FIG. 1(B) in a group (hereinafter, referred to as a token loop process). The communication terminal 100 as the group root node which received the above-mentioned looped GC performs the token loop process. Here, it is assumed that the node 41 is a group root node which has received the looped GC.

It is to be noted that when there is one node corresponding to a formed group, the token loop process is not performed in the group. In other words, when there are two or more nodes corresponding to the formed group, the token loop process is performed.

FIG. 11 is a flowchart of a token loop process.

In step S411, the token control unit 123 generates a token TK based on information indicated by a looped GC. More specifically, the token control unit 123 generates the token TK indicating node IDs indicated by passed node information PASSED_IDS in the looped GC. It is to be noted that the token control unit 123 sets an order of the node IDs indicated by the token TK so that nodes corresponding to a group loop the token TK by, for example, the most direct way.

Here, it is assumed that the looped GC used for generating the token TK is the looped GC shown in FIG. 10. In this case, a token TK shown in FIG. 12 is generated.

FIG. 12 is a diagram showing an example of a token TK.

In FIG. 12, "GRP_IDS" is information indicating node IDs each of which corresponds to a corresponding one of nodes corresponding to a group corresponding to a group root node which has generated a token TK (hereinafter, referred to as group node information). The token TK is sequentially transmitted to a node having, among the node IDs described in the token TK, a node ID on the right of a node ID of a node which has received the token TK.

It is to be noted that when a node having, among the nodes described in the token TK, the rightmost node ID receives the token TK, the token TK is transmitted to a node having, among the node IDs described in the token TK, the leftmost node ID.

With referent to FIG. 11 again, in step S412, the token control unit 123 transmits the generated token TK to a node having, among the node IDs indicated by the token TK, a node ID next to a node ID of a self node, using the transmitting unit 112.

Here, it is assumed that the node ID of the self node is "T41". In addition, it is assumed that the generated token TK is the token TK shown in FIG. 12. In this case, the node 41 as the group root node transmits the token TK to a node having a node ID "T51".

Then, as stated above, each of the nodes which has received the token TK transmits the token TK to a node having, among the nodes described in the received token TK, a node ID on the right of a node ID of each node. It is to be noted that the token control unit 123 of each node which has received the token TK transmits the token TK to the node having the node ID next to a node ID of a self node, after holding the received token TK for a predetermined period of time (e.g., 1 second).

It is to be noted that when receiving the token TK, a node having, among the node IDs described in the token TK, the rightmost node ID (e.g., "T52") transmits the token TK to a node having, among the node IDs, the leftmost node ID (e.g., "T41").

With the above process, for example, as shown by FIG. 1 (B), the token TK loops among the nodes corresponding to the group corresponding to the group root node. In addition, the group root node in each of the groups formed in the ALM distribution tree performs the token loop process shown in FIG. 11, and thus the token TK is independently looped in each group.

It is to be noted that when the above-mentioned grouping process N is performed, in the step S411 of the token loop process, the token control unit 123 generates the token TK (e.g., FIG. 12) so that the token TK loops by the most direct way between (i) each of the inferior nodes at the level corresponding to the value of GRP_SIZE indicated by the trigger message TR and (ii) the self node. Then, the above-mentioned step S412 is performed.

### (Local Improvement Process)

The following describes a process for performing a local improvement process to be performed in an ALM distribution tree according to the above-mentioned rules D1 and D2. It is to be noted that it is assumed that, as shown by FIG. 9(B), the groups are formed in the ALM distribution tree. Each of nodes making up the ALM distribution tree performs the local improvement determining process to be described, independently of other processes.

In addition, each node making up the ALM distribution tree performs a distribution tree change process to be described, independently of the other processes.

Here, it is assumed that the node 11 as the root node shown by FIG. 9 (B) transmits data DT to child nodes (the nodes 21 and 22) for every predetermined period of time (e.g., every 1 millisecond). It is assumed that the data DT transmitted by the node 11 as the root node is, for instance, streaming data. Every time receiving the data DT, each node (e.g., the node 31) other than the root node transmits the received data DT to the child nodes (e.g., the node 41).

Furthermore, it is assumed that every time receiving the data DT, each node (e.g., the nodes 21 and 31) other than the root node transmits a data reception message to parent nodes (e.g., the nodes 11 and 21). The data reception messages is a message for informing that the data DT has been received. With this, each node in the ALM distribution tree receives the data reception message for every predetermined period of time, and thus makes it possible to recognize that the data DT has been normally transmitted to the child nodes.

FIG. 13 is a flowchart of a local improvement determining process. Here, the following describes an example where the node 52 performs the local improvement determining process.

In addition, it is assumed that the token TK loops in each group through the above-mentioned process.

In step S511, the local improvement unit 122 determines whether or not a local improvement condition is satisfied. The local improvement condition is a condition for performing the local improvement process.

The local improvement condition is, for instance, a condition that traffic between a self node and a child node becomes equal to or greater than a predetermined value. In other words, the local improvement condition is a condition that the above-mentioned network congestion occurs between the self node and the child node. When the local improvement condition is satisfied, there is a node (hereinafter, referred to as a change-requiring node) which requires change of data destinations. In this case, the change-requiring node is the self node.

When the traffic between the self node and the child node becomes equal to or greater than the predetermined value, the local improvement unit 122 determines that the local improvement condition has been satisfied. To put it differently, in the step S511, the local improvement unit 122 determines whether or not there is the change-requiring node.

It is possible to determine whether or not the traffic between the self node and the child node has become equal to or greater than the predetermined value, based on a time interval for receiving the data reception message transmitted from the child node. For example, when the network congestion occurs, the time interval for receiving the data reception message becomes longer than a predetermined time interval. Hereinafter, the child node when the traffic between the self node and the child node becomes equal to or greater than the predetermined value is referred to as a congestion relief target node.

When YES in the step S511, the process advances to step S512. On the other hand, when NO in the step S511, the step S511 is performed again.

Here, it is assumed that traffic between the nodes 52 and 64 becomes equal to or greater than a predetermined value. Stated differently, it is assumed that the above-mentioned network congestion occurs between the nodes 52 and 64. In this case, the node 64 is the congestion relief target node. In this case, it is determined that the local improvement condition has been satisfied, and the process advances to step S512.

It is to be noted that the local improvement condition is not limited to the above condition, and may be any other condition. For instance, the local improvement condition may be a condition that the traffic between the self node and the child node becomes "0". In other words, the local improvement condition may be a condition that the child node does not operate.

In the step S512, a switch target node is determined. The switch target node is a node which allows traffic between the self node and the congestion relief target node to be less than the predetermined value. To put it differently, the switch target node is a node most suitable for relieving a network congestion. In addition, the switch target node is a node to be switched with the self node.

It is to be noted that the switch target node is a node other than a group root node. This is because switching the group root node prevents a parent node of the group root node corresponding to another group from knowing where to transmit data.

More specifically, the local improvement unit 122 determines the switch target node based on traffic with the parent node (e.g., the node 41) other than the congestion relief target node (e.g., the node 64) or the child node (e.g., the node 63) other than the congestion relief target node. In addition, the local improvement unit 122 obtains a node ID of the switch target node by inquiring of the switch target node about the node ID.

In step S513, the local improvement unit 122 determines whether or not the token control unit 123 holds the token TK. When YES in the step S513, the process advances to step S514. On the other hand, when NO in the step S513, the step S511 is performed again. Here, it is assumed that the token control unit 123 holds the token TK.

In step S514, it is determined whether or not there are all node IDs regarding the local improvement process. More specifically, the local improvement unit 122 determines whether or not the held token TK indicates the node ID of the self node and the node ID of the switch target node. When YES in the step S514, the process advances to step S515. On the other hand, when NO in the step S514, the step S511 is performed again.

Here, it is assumed that the held token TK is the token TK shown in FIG. 12. Furthermore, it is assumed that the node 52 performs the step S514. Moreover, it is assumed that the switch target node determined through the above-mentioned step is the node 63.

In this case, the node ID of the self node is "T52". In addition, the node ID of the switch target node is "T63". In this case, it is determined YES in the step S514, and the process advances to step S515.

In the step S515, a local improvement process T is performed. In an application layer, the local improvement process T is a process of switching a position of the change-requiring node (e.g., the node 52) with a position of the switch target node (e.g., the node 63) in an ALM distribution tree.

In a physical layer, the local improvement process T includes a destination switching process of changing a data destination set to the change-requiring node with a data destination set to the switch target node. More specifically, the destination switching process is a process of changing the data destination set to the change-requiring node with the data destination set to the switch target node, and vice versa.

It is to be noted that when the switch target node (e.g., the node 63) is a child node of the change-requiring node, the destination switching process includes a process in which a data destination of a parent node (e.g., the node 52) to which the switch target node is set as a data destination is changed with the data destination set to the switch target node.

Furthermore, in the physical layer, the local improvement process T includes a process in which at least part of data destinations of a node (e.g., the node 41) to which the change-requiring node (e.g., the node 52) is set as a data destination is changed with the switch target node (e.g., the node 63).

More specifically, in the local improvement process T, the local improvement unit 122 generates a local improvement message IPM. The local improvement message IPM is a message for performing the local improvement process. In the local improvement process T, a local improvement message IPM (hereinafter, referred to as a first local improvement message) to be transmitted to a parent node of the change-requiring node and a local improvement message IPM (hereinafter, referred to as a second local improvement message) to be transmitted to the switch target node are generated. Then, the local improvement unit 122 transmits each of the first and second local improvement messages to a node to be a destination.

Here, it is assumed that the switch target node is determined to be the node 63 through the step S512. In this case, the first and second local improvement messages for performing the local improvement process for switching the position of the node 52 with the position of the node 63 are generated.

Furthermore, it is assumed that the node 52 performs the step S515. Moreover, it is assumed that the change-requiring node is the node 52 (self node).

In this case, the generated first local improvement message is a message to be transmitted to the node 41 which is the parent node of the change-requiring node (node 52). In addition, the generated second local improvement message is a message to be transmitted to the node 63 as the switch target node.

Here, it is assumed that data destinations set to the node 41 are the nodes 51 and 52. It is to be noted that data destination information is represented by, for example, an IP address.

Furthermore, in this case, the first local improvement message shows an instruction for changing part of the data destinations of the node 41 (an IP address of the node 52) to an IP address of the node 63. Moreover, the second local improvement message shows an IP address of the change-requiring node, an instruction for setting the IP address of the change-requiring node to a data destination of the node 63 as the switch target node, and an instruction for requesting data destination information (e.g., an IP address) of the node 63 as the switch target node.

It is to be noted that when receiving the data destination information from the switch target node, the local improvement unit 122 sets a data destination indicated by the received data destination information to a data destination of the self node.

Then, the local improvement unit 122 transmits the generated first local improvement message to the node 41. In addition, the local improvement unit 122 transmits the generated second local improvement message to the node 63 as the switch target node.

FIG. 14 is a flowchart of a distribution tree change process. As mentioned above, each node making up the ALM distribution tree performs the distribution tree change process, independently of the other processes. Here, the following describes an example where the node 41 performs the distribution tree change process.

In step S611, the local improvement unit 122 determines whether or not a local improvement message has been received. When YES in the step S611, the process advances to step S612. On the other hand, when NO in the step S611, the step S611 is performed again. Here, it is assumed that the node 41 receives the above-mentioned first local improvement message from the change-requiring node (node 52).

In step S612, a process based on message is performed. In the process based on message, the local improvement unit 122 performs a process based on the received local improvement message. Here, it is assumed that the received local improvement message is the above-mentioned first local improvement message. In addition, it is assumed that the first local improvement message shows the instruction for changing the part of the data destinations of the node 41 (the IP address of the node 52) to the IP address of the node 63.

In this case, the local improvement unit 122 changes the part of the data destinations (the IP address of the node 52) set to the self node (node 41) to the IP address of the node 63. In other words, the part of the data destinations (node 52) set to the self node (node 41) is changed with the node 63.

The process based on message is terminated after the above steps. Then, the step S611 is performed again.

The following describes a case where the node 63 performs the distribution tree change process shown in FIG. 14. Here, it is assumed that the node 63 receives the above-mentioned second local improvement message from the change-requiring node (node 52).

In this case, it is determined YES in the step S611, and the process advances to the step S612.

In the process based on message of the step S612, the local improvement unit 122 performs a process based on the received second local improvement message. It is assumed that the second local improvement message shows the IP address of the change-requiring node as the data destination of the change-requiring node, the instruction for setting the IP address of the change-requiring node to the data destination of the node 63 as the switch target node, and the instruction for requesting the data destination information (e.g., the IP address) of the node 63 as the switch target node.

In this case, the local improvement unit 122 sets (changes) the data destination set to the self node (node 63) to the destination (IP address) of the change-requiring node. In addition, the local improvement unit 122 transmits data destination information of the self node to the node 52.

As stated above, when receiving the data destination information from the switch target node (node 63), the local improvement unit 122 of the node 52 performing the above-mentioned local improvement process T sets the data destination indicated by the received destination information to the data destination of the self node. Next, the local improvement process T shown in FIG. 13 is terminated. Then, the step S511 is performed again.

Through the above local improvement process T, all the data destinations of the change-requiring node are changed with all the data destinations of the switch target node. It is to be noted that the local improvement process T is not limited to the process in which all the data destinations of the change-requiring node are changed with all the data destinations of the switch target node. The local improvement process T may be, for instance, a process in which part of the data destinations of the change-requiring node is changed with part of the data destinations of the switch target node.

It is to be noted that a node other than the change-requiring node (e.g., the node 52) which requires the change of the data destination may perform the local improvement determining process shown in FIG. 13. For example, it is assumed that the change-requiring node is the node 52. In addition, it is assumed that the 41 monitors a state of traffic between the nodes 52 and 64.

In this case, the node 41 may perform the local improvement determining process shown in FIG. 13. In this case, the local improvement determining process performed by the node 41 is, for instance, a process for switching the position of the node 52 with the position of the node 63 in the ALM distribution tree.

As described above, in the present embodiment, the network congestion is relieved through the above local improvement process T. Furthermore, the distribution tree change process allows only the node holding the token TK to perform the local improvement process, and thus local improvement processes cannot be performed in one group simultaneously.

Consequently, even when the network congestion occurs simultaneously and the local improvement process for relieving the network congestion is performed in each of groups formed in the ALM distribution tree, it is possible to prevent the inconsistency of the ALM distribution tree from occurring.

Moreover, only the node holding the token TK can perform the local improvement process, and thus it is possible to surely perform the local improvement process with no influence of the other processes on the local improvement process.

Furthermore, when the network congestion occurs simultaneously in each group formed in the ALM distribution tree, the local improvement determining process shown in FIG. 13 and the distribution tree change process shown in FIG. 14 are simultaneously performed, and thus the local improvement process is performed in each group. In other words, it is possible to immediately perform the local improvement processes in the ALM distribution tree.

Therefore, it is possible to relieve network congestions occurring at multiple locations more immediately than a sequential execution process as a conventional technique. To put it differently, it is possible to immediately reconstruct the ALM distribution tree. Stated differently, it is possible to improve the ALM distribution tree more immediately than the sequential execution process as the conventional technique.

Furthermore, in the present invention, the token TK is designed to hold group node information (GRP_IDS). As a result, each node in the ALM distribution tree does not need to hold and manage the group node information. Thus, it is possible to simplify group management.

It is to be noted that a network overhead caused by eliminating the inconsistency of the ALM distribution tree is the sum total of traffic at a time of forming a group and traffic at a time of looping a token. The traffic at the time of forming the group is single traffic. In addition, the traffic at the time of looping the token is sufficiently small, because the token TK holds the group node information. Thus, in the present invention, the network overhead caused by eliminating the inconsistency of the ALM distribution tree is significantly small.

As described above, the present invention makes it possible to immediately eliminate, with the small network overhead, the inconsistency of the ALM distribution tree which may occur when the local improvement processes are simultaneously performed at the multiple locations. As a result, it is possible to achieve high QoS (Quality of Service).

### <Modification of Embodiment 1>

In Embodiment 1, sizes and positions of the groups to be formed in the ALM distribution tree are fixed. In other words, the number of the groups to be formed in the ALM distribution tree and the number of nodes corresponding to each of the groups are fixed. In addition, the local improvement process of switching the positions of the two nodes between the two different groups is prohibited.

Consequently, for instance, when a network congestion occurs between the groups GP1 and GP2 in a situation where the groups GP1 to GP3 are formed as shown by FIG. 9 (B), there is a problem that the local improvement process for relieving the network congestion is not performed.

In the modification of the present embodiment, the above problem is solved by dynamically changing the sizes and the positions of the groups to be formed in the ALM distribution tree. To put it differently, the above problem is solved by dynamically changing the number of the groups to be formed in the ALM distribution tree and the number of the nodes corresponding to each of the groups.

A summary of the modification of the present embodiment is that when a predetermined condition for grouping is satisfied, a trigger message TR for which a value of START_INDEX and a value of group size GRP_SIZE indicated by the trigger message TR are changed is broadcasted to the nodes making up the ALM distribution tree. The condition for grouping is, for example, a condition that a predetermined period of time has passed.

With this, the sizes and the positions of the groups to be formed in the ALM distribution tree are dynamically changed. Stated differently, the number of the groups to be formed in the ALM distribution tree and the number of the nodes corresponding to each of the groups are dynamically changed.

A communication terminal as a node according to the modification of the present embodiment is the communication terminal 100 shown in FIG. 3. Thus, a detailed description of the communication terminal 100 is not repeated.

### (Group Formation)

The following describes a process for forming groups (hereinafter, referred to as a process for grouping A). The communication terminal 100 that is the node 11 as the root node performs the process for grouping A. It is to be noted that the communication terminal 100 that is any node other than the root node may perform the process for grouping A below.

FIG. 15 is a flowchart of a process for grouping A. Steps in FIG. 15 which are numbered in the same manner as in FIG. 4 are the same as the steps described in Embodiment 1, and thus a detailed description of the former is not repeated.

In step S110A, the group forming unit 124 determines whether or not a predetermined condition for grouping has been satisfied. Here, the condition for grouping is, for example, a condition that a predetermined period of time has passed. When YES in the step S110A, the process advances to step S111A. On the other hand, when NO in the step S110A, the step S110A is performed again.

It is to be noted that the condition for grouping may be any other condition. The condition for grouping is, for instance, a condition that the current time is any time.

In the step S111A, a trigger message generating process A is performed. In the trigger message generating process A, the group forming unit 124 generates a trigger message TR. The generated trigger message TR is, for example, the trigger message TR shown in FIG. 5. In the trigger message generating process A, every time the step S111A is repeated, the group forming unit 124 generates a trigger message TR that is different from a previously generated trigger message TR.

For example, when a trigger message TR generated through a previous trigger message generating process A is the trigger message TR shown in FIG. 5, a trigger message TR for which at least either a value of group size GRP_SIZE or a value of START_INDEX is changed is generated in the current trigger message generating process A.

To put it differently, every time the step S111A is repeated, a trigger message TR (group formation data) for which at least either the sizes or the positions of the groups to be formed in the ALM distribution tree are dynamically changed is generated in the trigger message generating process A. Stated differently, every time the step S111A is repeated, the trigger message TR (group formation data) for changing at least either the number of groups to be formed in the ALM distribution tree or the number of nodes corresponding to each of the groups is generated in the trigger message generating process A. In other words, every time the step S111A is repeated, the trigger message TR (group formation data) that is generated by the group forming unit 124 is changed.

The step S112 is the same as in Embodiment 1, and thus a detailed description of the step S112 is not repeated. The trigger message TR is transmitted in the step S112. Then, the step S110A is performed again.

To put it differently, in the process for grouping A, every time the condition for grouping is satisfied, the trigger message TR (group formation data) is generated and transmitted to a child node. When the condition for grouping is, for instance, the condition that the predetermined period of time has passed, the trigger message TR that is different from the previous trigger message TR is transmitted to the child node every time the predetermined period of time has passed.

As with Embodiment 1, each of the nodes making up the ALM distribution tree performs the grouping node determining process shown in FIG. 6. It is to be noted that it is assumed that the root node performs not the step S211 shown in FIG. 6 but only the steps S212 and S213.

In addition, a group root node (grouping node) among the nodes making up the ALM distribution tree performs the grouping process shown in FIG. 7.

FIG. 16 is a diagram illustrating a process of forming a group in an ALM distribution tree. The following describes the process of forming a group in the ALM distribution tree with reference to FIG. 16 (A) to (F).

The node 11 as the root node transmits a trigger message TR to the nodes 21 and 22 as the child nodes by performing the process for grouping A shown in FIG. 15 (see FIG. 16 (A)). Here, it is assumed that the trigger message TR transmitted by the node 11 is the trigger message TR shown in FIG. 5. To put it differently, a value of START_INDEX and a value of group size GRP_SIZE that are indicated by the trigger message TR are "0" and "2", respectively.

In this case, the node 11 as the root node determines that a self node is a group root node (grouping node) by performing the grouping node determining process shown in FIG. 6, and performs the grouping process shown in FIG. 7. The node 11 transmits a GC to another node (the node 21) through the process that is the same as the process described in Embodiment 1 (see FIG. 16 (A)).

Then, as shown by FIG. 16 (B), the node 21 transmits the trigger message TR to the nodes 31 and 32 as the child nodes through the process that is the same as the process described in Embodiment 1. Furthermore, the nodes 11, 21, 31, and 32 perform a process for looping a GC through the process that is the same as the process described in Embodiment 1.

As shown by FIG. 16 (C), the group GP1 is formed through the looping of the GC. Moreover, the node 31 transmits the received trigger message TR to the nodes 41 and 42 as the child nodes.

Each of the nodes 41 and 42 determines that a self node is a group root node (grouping node) by performing the grouping node determining process shown in FIG. 6, and performs the grouping process shown in FIG. 7. The node 41 transmits the GC to another node (the node 51) through the process that is the same as the process described in Embodiment 1 (see FIG. 16 (D)). As with the node 41, the node 42 transmits the GC to another node (the node 53) through the process that is the same as the process described in Embodiment 1 (see FIG. 16 (D)).

Furthermore, the node 41 transmits the received trigger message TR to the nodes 51 and 52 as the child nodes (see FIG. 16 (D)). The node 42 transmits the received trigger message TR to the nodes 53 and 54 as the child nodes.

Then, the GC is looped among the nodes 41, 51, 52, and 61 to 64 through the process of looping a GC described in Embodiment 1 with reference to FIG. 9 (A) (see FIG. 16 (E)).

Moreover, each of the nodes 51 to 54 transmits the received trigger message TR to corresponding child nodes. It is to be noted that the child nodes (e.g., the node 61) of the nodes 51 to 54 are the lowest-level nodes, and thus each of them only receives the trigger message TR.

As shown by FIG. 16 (F), in addition to the group GP1, the groups GP2 and GP3 are further formed through the looping of the GC generated by each of the nodes 41 and 42 in the same manner as shown by FIG. 9 (B).

Through the above processes, the trigger message TR transmitted by the node 11 as the root node is transmitted to all of the nodes making up the ALM distribution tree, and at the same time the groups each corresponding to one or more nodes are formed in the ALM distribution tree.

It is to be noted that the token loop process shown in FIG. 11, the local improvement determining process shown in FIG. 13, and the distribution tree change process shown in FIG. 14 that have been described in Embodiment 1 are performed in each of the groups.

Furthermore, when the trigger message TR that is transmitted to the child nodes by the node 11 as the root node is different from a previously transmitted trigger message TR, the number of groups to be formed in the ALM distribution tree and the number of nodes corresponding to each group are changed through the process for grouping A shown in FIG. 15.

It is to be noted that the groups may be formed by performing the grouping process N in the step S314 of the grouping process that is shown in FIG. 7 and performed in the modification of the present embodiment. In this case, the steps S311 to 313 and the GC loop process are not performed.

FIG. 17 is a diagram showing an example of groups formed in an ALM distribution tree.

FIG. 17 (A) shows groups formed when a value of START_INDEX and a value of group size GRP_SIZE that are indicated by the trigger message TR transmitted by the node 11 are "0" and "3", respectively.

FIG. 17 (A) shows, as an example of the formed groups, groups GP11 and GP21 to GP24. A size of each of the groups GP21 to GP24 is "1". In other words, each of the groups GP21 to GP24 includes three nodes. This is because the number of nodes included in a group at the lowest level is limited by a size of the ALM distribution tree, that is, the number of nodes making up in the ALM distribution tree.

FIG. 17 (B) shows groups formed when the value of START_INDEX and the value of the group size GRP_SIZE that are indicated by the trigger message TR transmitted by the node 11 are "1" and "2", respectively.

FIG. 17 (B) shows, as an example of the formed groups, groups GP12 and GP20 to GP24.

When START_INDEX > 0, it is clear from the above Equation 1 that a size of a highest-level group (e.g., the group P12) is smaller than the value of the group size GRP_SIZE "2". In this case, the group GP12 includes one node.

As described above, in the modification of the present embodiment, the root node transmits the different trigger message TR to the child nodes every time the predetermined period of time has passed. With this, for instance, as shown by any one of FIG. 16 (F), FIG. 17 (A), and FIG. 17 (B), the groups are formed in the ALM distribution tree based on the values indicated by the trigger message TR.

Stated differently, the sizes and the positions of the groups to be formed in the ALM distribution tree are dynamically changed every time the predetermined period of time has passed. To put it differently, the number of groups to be formed in the ALM distribution tree and the number of nodes corresponding to each of the groups are changed every time the predetermined period of time has passed.

Here, for example, it is assumed that a network congestion occurs between the nodes 31 and 41 in FIG. 16 (F). In this case, as shown by FIG. 16 (F), when the groups are formed, the network congestion is a network congestion occurring between the groups GP1 and GP2. As a result, when the sizes and the positions of the groups are supposedly fixed, the local improvement process is not performed due to the above-mentioned rule D1, and thus the network congestion is not relieved.

However, in the modification of the present embodiment, the sizes and the positions of the groups to be formed in the ALM distribution tree are dynamically changed. With this, for instance, when the groups are formed as shown by FIG. 17 (A) or (B) and the nodes 31 and 41 correspond to the same group, the local improvement process is performed to relieve the network congestion in the group.

Therefore, in addition to the advantageous effect produced by Embodiment 1, the modification of the present embodiment produces an advantageous effect of relieving a network congestion, regardless of a position of an occurrence of the network congestion. In other words, it is possible to relieve the network congestion, regardless of the position of the occurrence of the network congestion, and to immediately eliminate, with the small network overhead, the inconsistency of the ALM distribution tree which may occur when the local improvement process is performed simultaneously at the multiple locations.

It is to be noted that, in the modification of the present embodiment, the value of the group size GRP_SIZE in the trigger message TR is not changed while the groups are formed in the ALM distribution tree. However, the present invention is not limited to the above, and when any node in the ALM distribution tree transmits (forwards) a trigger message TR to a child node, the value of the group size GRP_SIZE may be changed based on a condition.

In this case, it is possible to vary, for each of groups, a size of the group. To put it differently, it is possible to form the groups each having a different size. Consequently, it is possible to form the groups more flexibly.

### (Functional Block Diagram)

FIG. 18 is a block diagram showing a first functional configuration characteristic to a communication terminal 100 according to the present invention. In other words, FIG. 18 is the block diagram showing, among functions of the communication terminal 100 shown in FIG. 3, primary functions related to the present invention.

The communication terminal 100 having the first functional configuration is, among nodes as communication terminals making up an ALM distribution tree, a communication terminal as a predetermined node. The predetermined node is, for instance, a root node. It is to be noted that the predetermined node may be any node other than the root node. At least part of the nodes making up the ALM distribution tree performs data communication.

A data destination is preset to each of the nodes according to a position of each node in the ALM distribution tree so that data transmitted from the predetermined node is transmitted to, among the nodes, all of the nodes other than the predetermined node.

As shown in FIG. 18, the communication terminal 100 includes a generating unit 210 and a transmitting unit 220.

The generating unit 210 generates group formation data for forming groups among the nodes making up the ALM distribution tree. The group formation data is, for example, a trigger message TR. The generating unit 210 corresponds to the group forming unit 124 which is shown in FIG. 3 and performs either the process for grouping shown in FIG. 4 or the process for grouping A shown in FIG. 15.

The transmitting unit 220 transmits the group formation data to a node that is a destination set to the communication terminal 100. The transmitting unit 220 corresponds to the group forming unit 124 which performs the step S112 shown in either FIG. 4 or FIG. 15.

When a condition for grouping is satisfied, the generating unit 210 converts the group formation data into data for changing at least one of the number of groups and the number of nodes corresponding to each of the groups that are based on the group formation data. Here, the condition for grouping is, for instance, a condition that a predetermined period of time has passed.

Every time the group formation data is converted, the transmitting unit 220 transmits the converted group formation data to the node that is the destination set to the communication terminal 100.

More specifically, for example, when the number of the nodes corresponding to each group is N, where N is an integer equal to or greater than two, the generating unit 210 generates group formation data for forming a group in which a local improvement process of switching positions of two nodes among N nodes with each other is performed.

Furthermore, for instance, the generating unit 210 generates group formation data indicating information for identifying a node located at a boundary of the formed group.

Moreover, for example, when the number of the nodes corresponding to each group is N and traffic among N nodes exceeds a predetermined value, the generating unit 210 generates group formation data for forming a group in which the local improvement process is performed so that the traffic becomes less than the predetermined value.

It is to be noted that all or part of the generating unit 210 and the transmitting unit 220 shown in FIG. 18 may be configured by hardware such as an LSI (Large Scale Integration). In addition, all or part of the generating unit 210 and the transmitting unit 220 may be a module of a program executed by a processor such as a CPU.

FIG. 19 is a block diagram showing a second functional configuration characteristic to a communication terminal 100 according to the present invention. In other words, FIG. 19 is the block diagram showing, among the functions of the communication terminal 100 shown in FIG. 3, primary functions related to the present invention.

The communication terminal 100 having the second functional configuration is, among nodes as communication terminals making up an ALM distribution tree, a communication terminal as one of the nodes. A data destination is preset to each of the nodes according to a position of each node in the ALM distribution tree.

As shown in FIG. 19, the communication terminal 100 includes a receiving unit 310, a determining unit 320, a group forming unit 330, and a local improvement unit 340.

The receiving unit 310 receives group formation data for causing a particular node among the nodes to form a group including M nodes including a self node among the nodes, where M is an integer equal to or greater than two, the group formation data being data transmitted from another node. Here, the particular node is, for instance, the above-mentioned grouping node. The group formation data is, for example, a trigger message TR. The group formation data indicates information (e.g., each of the values shown in FIG. 5) for determining whether or not the self node is the particular node.

The receiving unit 310 corresponds to, for instance, the receiving unit 110 shown in FIG. 3 and the group forming unit 124 which performs the step S211 shown in FIG. 6.

The determining unit 320 determines whether or not the self node is the particular node based on the group formation data received by the receiving unit 310. The determining unit 320 corresponds to, for example, the group forming unit 124 which performs the step S212 shown in FIG. 6.

When the determining unit 320 determines that the self node is the particular node, the group forming unit 330 forms the group including M nodes based on the group formation data. The group forming unit 330 corresponds to the group forming unit 124 which performs the step S213 shown in FIG. 6, that is, the grouping process shown in FIG. 7.

The local improvement unit 340 determines whether or not there is a change-requiring node, which is a node requiring change of a data destination, among the M nodes corresponding to the group formed by the group forming unit 330. The local improvement unit 340 corresponds to, for instance, the local improvement unit 122 which performs the local improvement determining process shown in FIG. 13.

When it is determined that there is the change-requiring node, the local improvement unit 340 further performs a local improvement process of switching a data destination set to the change-requiring node with a data destination set to the another node.

More specifically, for instance, when traffic between two nodes among the M nodes is equal to or greater than a predetermined value, the local improvement unit 340 determines that at least one of the two nodes is the change-requiring node and that there is the change-requiring node.

It is to be noted that all or part of the receiving unit 310, the determining unit 320, the group forming unit 330, and the local improvement unit 340 shown in FIG. 19 may be configured by the hardware such as the LSI (Large Scale Integration). In addition, all or part of the receiving unit 310, the determining unit 320, the group forming unit 330, and the local improvement unit 340 may be the module of the program executed by the processor such as the CPU.

Although the communication terminal 100 according to the present invention has been described based on the embodiment above, the present invention is not limited to the embodiment. The scope of the present invention includes the present embodiment to which alterations conceived by a person with an ordinary skill in the art are made or other embodiments obtained by combining components in different embodiments without departing from the gist of the present invention.

Furthermore, all or part of the components included in the above communication terminal 100 may be configured by the hardware. Moreover, the all or part of the components included in the above communication terminal 100 may be the module of the program executed by, for instance, the CPU (Central Processing Unit).

Furthermore, the all or part of the components included in the above communication terminal 100 may be configured by one system LSI (Large Scale Integration). The system LSI is a super-multifunctional LSI manufactured by stacking components on one chip, and is more specifically a computer system including a microprocessor, a Rom (Read Only Memory), and a RAM (Random Access Memory).

For example, the control unit 120 may be configured by the one system LSI in FIG. 3.

Moreover, the present invention may be realized as a method having, as steps, operations of the characteristic components included in the communication terminal 100. Furthermore, the present invention may be realized as a program causing a computer to execute each of the steps included in such a method. Moreover, the present invention may be realized as a computer-readable recording medium on which such a program is recorded. Furthermore, the program may be distributed via a transmission medium such as the Internet.

The embodiment thus disclosed should be considered not as limitary but as exemplary in all respects. The scope of the present invention is indicated not by the above description but by the scope of claims, and it is intended that meanings equal to the scope of claims and all changes within the scope of claims are included in the scope of the present invention.

### [Industrial Applicability]

The present invention makes it possible to achieve higher QoS. Thus, the present invention is applicable to, for example, large-scale video streaming and distance learning systems using an ALM technique.

### [Reference Signs List]

100 Communication terminal
110, 310 Receiving unit
112, 220 Transmitting unit
120 Control unit
121 Data control unit
122, 340 Local improvement unit
123 Token control unit
124, 330 Group forming unit
210 Generating unit
320 Determining unit

## Claims

1. A communication terminal as a predetermined node among nodes as communication terminals which make up an ALM (Application Layer Multicast) distribution tree,
wherein at least part of the nodes perform data communication, and
a data destination is preset to each of the nodes according to a position of each node in the ALM distribution tree so that data transmitted from the predetermined node is transmitted to, among the nodes, all of the nodes other than the predetermined node,
said communication terminal as the predetermined node comprising:
a generating unit configured to generate group formation data for forming groups among the nodes; and
a transmitting unit configured to transmit the group formation data to a node that is a destination set to said communication terminal,
wherein said generating unit is further configured to convert, when a condition for grouping is satisfied, the group formation data into data for changing at least one of the number of groups and the number of nodes corresponding to each of the groups that are based on the group formation data,
said transmitting unit is configured to transmit, every time the group formation data is converted, the converted group formation data to the node that is the destination set to said communication terminal, and
said generating unit is configured to generate, when the number of nodes corresponding to a group to be formed is N, where N is an integer equal to or greater than two, the group formation data for forming the group in which a local improvement process of switching positions of two nodes among the N nodes with each other is performed.

2. The communication terminal according to Claim 1,
wherein the condition for grouping is a condition that a predetermined period of time has passed.

3. The communication terminal according to Claim 1 or 2,
wherein said generating unit is configured to generate the group formation data indicating information for identifying a node located at a boundary of the group to be formed.

4. The communication terminal according to any one of Claims 1 to 3,
wherein said generating unit is configured to generate, when the number of the nodes corresponding to the group to be formed is N and traffic between the N nodes is equal to or greater than a predetermined value, the group formation data for forming the group in which the local improvement process is performed so that the traffic becomes less than the predetermined value.

5. The communication terminal according to any one of Claims 1 to 4,
wherein the predetermined node is a root node.

6. The communication terminal according to any one of Claims 1 to 5, further comprising
a token control unit configured to transmit, when the number of nodes corresponding to a group corresponding to said communication terminal is N, a token to be sequentially received by each of the N nodes,
wherein said token control unit is configured to transmit, only during a period in which one of the N nodes having received the token holds the token, the token which allows the one of the N nodes holding the token to perform the local improvement process.

7. A communication terminal as one of nodes as communication terminals which make up an ALM (Application Layer Multicast) distribution tree,
wherein a data destination is preset to each of the nodes according to a position of each node in the ALM distribution tree,
said communication terminal as the one of the nodes comprising:
a receiving unit configured to receive group formation data for causing a particular node among the nodes to form a group including, among the nodes, M nodes including a self node which is said communication terminal, where M is an integer equal to or greater than two, the group formation data being data transmitted from another one of the nodes, and the group formation data indicating information for determining whether or not the self node is the particular node;
a determining unit configured to determine whether or not the self node is the particular node based on the received group formation data;
a group forming unit configured to form, when said determining unit determines that the self node is the particular node, the group including the M nodes; and
a local improvement unit configured to determine whether or not there is a change-requiring node which is a node requiring change of a data destination, among the M nodes corresponding to the group formed by said group forming unit, and
wherein said local improvement unit is further configured to perform, when it is determined that there is the change-requiring node, a local improvement process of changing a data destination set to the change-requiring node with a data destination set to the another one of the nodes.

8. The communication terminal according to Claim 7,
wherein the local improvement process includes a process in which at least one of data destinations of a node to which the change-requiring node is set as a data destination is changed with the another one of the nodes, and a data destination of a node to which the another one of the nodes is set as a data destination is changed with the data destination set to the another one of the nodes.

9. The communication terminal according to Claim 8,
wherein each of the change-requiring node and the another one of the nodes is, among the M nodes, one of the nodes except a group root node which is a highest-level node.

10. The communication terminal according to any one of Claims 7 to 9, further comprising
a token control unit configured to transmit, when the number of nodes corresponding to a group corresponding to said communication terminal is M, a token to be sequentially received by each of the M nodes,
wherein said token control unit is configured to transmit, only during a period in which one of the M nodes having received the token holds the token, the token which allows the one of the M nodes holding the token to perform the local improvement process.

11. The communication terminal according to any one of Claims 7 to 10,
wherein said local improvement unit is configured to determine, when traffic between two nodes among the M nodes is equal to or greater than a predetermined value, at least one of the two nodes to be the change-requiring node.

12. A communication state change method performed by a communication terminal as a predetermined node among nodes as communication terminals which make up an ALM (Application Layer Multicast) distribution tree,
wherein at least part of the nodes perform data communication, and
a data destination is preset to each of the nodes according to a position of each node in the ALM distribution tree so that data transmitted from the predetermined node is transmitted to, among the nodes, all of the nodes other than the predetermined node,
said communication state change method comprising:
generating group formation data for forming groups among the nodes; and
transmitting the group formation data to a node that is a destination set to said communication terminal,
wherein in said generating, when a condition for grouping is satisfied, the group formation data is converted into data for changing at least one of the number of groups and the number of nodes corresponding to each of the groups that are based on the group formation data,
in said transmitting, every time the group formation data is converted, the converted group formation data is transmitted to the node that is the destination set to said communication terminal, and
in said generating, when the number of the nodes corresponding to a group to be formed is N, where N is an integer equal to or greater than two, generated is the group formation data for forming the group where a local improvement process of switching positions of two nodes among the N nodes with each other is performed.

13. A communication state change method performed by a communication terminal as one of nodes as communication terminals which make up an ALM (Application Layer Multicast) distribution tree,
wherein data destinations are preset to each of the nodes according to a position of each node in the ALM distribution tree, and
said communication state change method comprising:
receiving group formation data for causing a particular node among the nodes to form a group including, among the nodes, M nodes including a self node which is the communication terminal, where M is an integer equal to or greater than two, the group formation data being data transmitted from another one of the nodes, and the group formation data indicating information for determining whether or not the self node is the particular node;
determining whether or not the self node is the particular node based on the received group formation data;
forming, when it is determined in said determining that the self node is the particular node, the group including the M nodes; and
determining whether or not there is a change-requiring node which is a node requiring change of a data destination, among the M nodes corresponding to the group formed in said forming, and
wherein in said determining whether or not there is a change-requiring node, when it is determined that there is the change-requiring node, performed is a local improvement process of changing a data destination set to the change-requiring node with a data destination set to another one of the nodes.

14. A communication state change method which dynamically changes a communication state of data communication performed by at least part of nodes as communication terminals which make up an ALM (Application Layer Multicast) distribution tree,
wherein a data destination is preset to each of the nodes according to a position of each node in the ALM distribution tree so that data transmitted from the predetermined node is transmitted to, among the nodes, all of the nodes other than the predetermined node,
said communication state change method comprising:
performing a process for forming groups among the nodes making up the ALM distribution tree;
performing, every time a condition for grouping is satisfied, a process for changing at least one of the number of the formed groups and the number of the nodes corresponding to each of the groups; and
performing, when there is a change-requiring node which is a node requiring change of a position of the node in each of at least two groups among the groups corresponding to two or more nodes, a local improvement process of switching a position of the change-requiring node with a position of another one of the nodes corresponding to the group corresponding to the change-requiring node.
